# EUROPEAN PATENT SPECIFICATION

(11) **EP 1 289 222 B1**
(45) Date of publication and mention of the grant of the patent: **13.06.2007**
(21) Application number: 02016263.2
(22) Date of filing: 23.07.2002
(51) Int. Cl.: H04L 29/06

(54) **Relay server, relay server method, and relay server computer program product**
Relay Server, Relay Server Methode und Relay Server Computer Programmprodukt
Relay server, methode de relay server et produit d'un programme d'ordinateur relay server

(30) Priority: 31.07.2001 JP 2001232670
(43) Date of publication of application: 05.03.2003
(73) Proprietor: MATSUSHITA ELECTRIC INDUSTRIAL CO., LTD., Kadoma-shi, Osaka 571-8501 (JP)
(72) Inventor: Nakamura, Manabu, Machida-shi, Tokyo (JP); Matsumoto, Kazuya, Ota-ku, Tokyo (JP); Ohno, Hiroyuki, Setagaya-ku, Tokyo (JP); Misawa, Motohiro, Yokohama-shi, Kanagawa-ken (JP)
(74) Representative: Balsters, Robert

(56) References cited:
- EP-A- 1 117 214
- WO-A-00/49493
- DE-A1- 10 036 160
- US-B1- 6 222 536
- SUDAN M ET AL: "Gateway based approach for conducting multiparty multimedia sessions over heterogeneous signaling domains" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, vol. 2, 7 April 1997 (1997-04-07), pages 701-710, XP010252051 ISBN: 0-8186-7780-5

## Description

### BACKGROUND OF THE INVENTION

### 1. Field of the Invention

The present invention relates to a relay server for, a relay server method of, and a relay server computer program product for receiving a plurality of data signals from a plurality of image output apparatuses and delivering the data signals thus received to a plurality of receiving terminals, and more particularly, to a relay server for, a relay server method of, and a relay server computer program product for receiving a plurality of image data signals in respective input communications protocols from a plurality of image output apparatuses, and delivering the image data signals thus received to a plurality of receiving terminals in output communications protocols respectively applicable to the receiving terminals wherein the input communications protocols may be different from the output communications protocols.

A relay server according to the preamble of claim 1 is disclosed in the document EP-A-1 117 214, as well as in "Gateway based approach for conducting multiparty multimedia sessions over heterogeneous signalling domains by Sudan et al.

### 2. Description of the Related Art

Up until now, there have been provided a wide variety of moving image delivering systems each for delivering moving image data signals captured by, for example, a vide camera, to a plurality of receiving terminals remotely placed from the vide camera through a relay server. Such a moving image delivering system comprises, for example, a video camera for taking a moving image to be converted to moving image data signals, a relay server for obtaining the moving image data signals from the video camera and delivering the moving image data signals, and a plurality of receiving terminals for receiving the moving image data signals from the relay server. In the moving image delivering system, the relay server and the plurality of receiving terminals may be connected through networks such as, for example, internet networks.

One of the conventional moving image delivering systems of this type is disclosed by Japanese Laid-Open Patent Publication No. 2000-341668 as comprising a camera unit for taking a moving image to be converted to moving image data signals in an input image quality, a first conventional relay server for inputting, converting the moving image data signals in the input image quality converted by the camera unit into moving image data signals in output image qualities, and transmitting the moving image data signals in the output image qualities thus converted, and a plurality of receiving terminals for receiving the moving image data signals in the output image qualities transmitted by the first conventional relay server wherein each of the receiving terminals have a requirement for an image quality, and the output image qualities of the moving image data signals are respectively conformable with the requirement of the receiving terminals. The first conventional relay server thus constructed makes it possible for each of the receiving terminals to receive the moving image data signals in an output image quality conformable with its requirement even if the requirements of the receiving terminals for the image quality may differ from one receiving terminal to another receiving terminal.

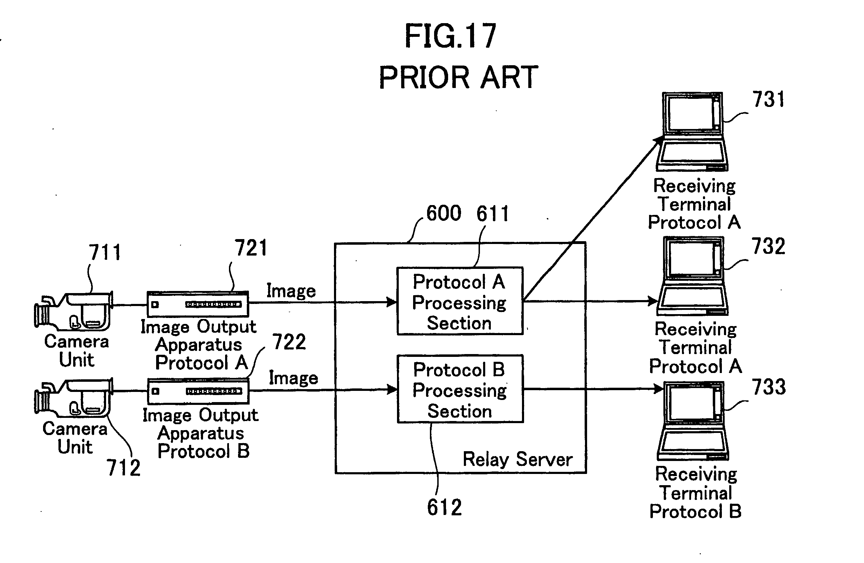

The second conventional moving image delivering system of another type is shown in FIG. 17 as comprising a plurality of camera units 711, 712 each for taking a moving image to be converted to moving image data signals, a plurality of image output apparatuses 721, 722 respectively connected with the camera units 711, 712 for respectively inputting the moving image data signals from the camera units 711, 712 and transmitting the moving image data signals thus inputted in respective communications protocols, for example, communications protocols A and B therethrough, a second conventional relay server 600 for receiving the moving image data signals in the communications protocols A and B respectively transmitted by the image output apparatuses 721, 722, and transmitting the moving image data signals in the protocols A and B thus received, and a plurality of receiving terminals 731, 732 for respectively receiving the moving image data signals in the protocol A and a receiving terminal 733 for receiving the moving image data signals in the protocol B wherein the protocol A is applicable to the receiving terminals 731, 732 and the protocol B is applicable to the receiving terminal 733. More specifically, the second conventional relay server 600 comprises a protocol A processing section 611 for receiving the moving image data signals in the protocol A and transmitting the moving image data signals in the protocol A thus received to the receiving terminals 731 and 732 which are conformable with the protocol A, and a protocol B processing section 612 for receiving the moving image data signals in the protocol B and transmitting the moving image data signals in the protocol B thus received to the receiving terminal 733 which is conformable with the protocol B. In the second conventional moving image delivering system, the second conventional relay server 600 thus constructed can receive the moving image data signals in respective communications protocols and transmit the moving image data signals in respective communications protocols to a plurality of receiving terminals which are respectively conformable with the communications protocols.

The second conventional moving image delivering system thus constructed, however, encounters a problem that the second conventional relay server 600 can transmit the moving image data signals in a communications protocol and a format received from an image output apparatus only to a receiving terminal which is conformable with the communications protocol and the format. This means that the second conventional relay server 600 of the second conventional moving image delivering system can receive and transmit the moving image data signals only between an image output apparatus and a receiving terminal both of which share the same communications protocol and format. This leads to the fact that the second conventional relay server 600 cannot receive and transmit the moving image data signals between an image output apparatus and a receiving terminal unless the image output apparatus and the receiving terminal share the same communications protocol and format.

Furthermore, the second conventional moving image delivering system thus constructed encounters another problem that the second conventional moving image delivering system comprising, for example, a plurality of image output apparatuses each for inputting and transmitting moving image data signals, leads to the increase in the amount of the moving image data signals to be received by the second conventional server, thereby making it difficult for the second conventional relay server 600 to synchronize and process the moving image data signals thus received.

The first conventional relay server of the first conventional moving image delivering system disclosed by Japanese Laid-Open Patent Publication No. 2000-341668 is designed to receive moving image data signals directly from the video camera in an analog format such as, for example, National Television Standard Committee, viz., NTSC conformable data signals, but not applicable to the moving image data in a network protocol.

The first conventional relay server of the first conventional moving image delivering system encounters another problem that the first conventional relay server of the first conventional moving image delivering system cannot input the moving image data signals from more than one camera unit, nor synthesize the moving image data signals from more than one camera unit. This means that the first conventional moving image delivering system is required to comprise a plurality of first conventional relay servers in order to input the moving data signals from a plurality of camera units, thereby increasing the amount of the moving data signals transmitted and received between the first conventional relay server and the camera units, and the first conventional relay server and the image output apparatuses.

Furthermore, the first conventional relay of the aforesaid first conventional moving image delivering system can convert the moving image data signals in an input image quality to the moving image data signals in an output image quality in terms of a parameter such as, for example, a frame rate. The first conventional relay of the first conventional moving image delivering system, however, cannot convert the moving image data signals in, for example, JPEG system to the moving image data signals in, for example, MPEG system in terms of coding system. This leads to the fact that the first conventional relay server cannot receive and transmit the moving image data signals between an image output apparatus and a receiving terminal unless the image output apparatus and the receiving terminal shares the same coding system. The present invention contemplates resolution of such problems.

### SUMMARY OF THE INVENTION

It is therefore an object of the present invention to provide a relay server which can receive and transmit the data signals between a plurality of image output apparatuses and a plurality of receiving terminals regardless of whether the image output apparatuses and the receiving terminals respectively share the same communications protocol and properties or not.

It is another object of the present invention to provide a relay server which makes it easy to synchronize and, if necessary, screen out the data signals received from a plurality of image output apparatuses so that the relay server can properly process the data signals even though the amount of the data signals may increase. In addition, the relay server receiving and transmitting data signals between a plurality of image output apparatuses and a plurality of receiving terminals in communications protocols applicable to a plurality of image output apparatuses and a plurality of receiving terminals is required to enhance the security so that an unauthorized person cannot have access to important information or resources through the relay server.

It is a further object of the present invention to provide a relay server which can receive and transmit the data signals between a plurality of image output apparatuses and a plurality of receiving terminals, but prevent an unauthorized person to have access to important information or resources through the relay server to enhance the security.

It is a still further object of the present invention to provide a relay server method which can receive and transmit the data signals between a plurality of image output apparatuses and a plurality of receiving terminals regardless of whether the image output apparatuses and the receiving terminals respectively share the same communications protocol and properties or not.

It is a yet further object of the present invention to provide a relay server computer program product which can receive and transmit the data signals between a plurality of image output apparatuses and a plurality of receiving terminals regardless of whether the image output apparatuses and the receiving terminals respectively share the same communications protocol and properties or not.

In accordance with a first aspect of the present invention, there is provided a relay server comprising: protocol conversion means for receiving an input data signal in an input-side protocol transmitted by an output entity, converting the input data signal in the input-side communications protocol into an output data signal in an output-side communications protocol applicable to an input entity, and transmitting the output data signal in the output-side communications protocol to the input entity; and control means for receiving terminal protocol information indicative of the output-side communications protocol applicable to the input entity from the input entity and controlling the protocol conversion means in response to the terminal protocol information. The input data signal in the input-side communications protocol includes a protocol element and data elements, the output data signal in the output-side communications protocol includes a protocol element and data elements, and the aforesaid protocol conversion means further comprises a protocol removing section for removing the protocol element from the input data signal in the input-side communications protocol to extract the data elements, and a protocol synthesizing section for synthesizing a protocol element and the data elements to generate the output data signal in the output-side communications protocol.

Each of the data elements may have a plurality of properties. The protocol conversion means comprises: a pipeline section for inputting the data elements extracted by the protocol removing section, converting the properties of the data elements thus inputted, and outputting the data elements having properties thus converted to the protocol synthesizing section.

The data elements may be image data elements respectively having image formats, wherein the pipeline section comprises: a plurality of pipeline components each for converting the image format of the image data element, the control means comprises: a pipeline storage component for storing therein an image format table indicative of relationship between a plurality of image formats and a plurality of pipeline components; an image format identification section for receiving terminal format information indicative of an output-side image format applicable to the input entity from the input entity, identifying an input-side image format applicable to the output entity on the basis of the input data signal transmitted by the output entity, identifying the output-side image format applicable to the input entity on the basis of the terminal format information, and judging whether the input-side image format is equal to the output-side image format, and a pipeline selecting section for selecting an applicable pipeline component applicable to convert the input-side image format to the output-side image format thus identified from among the pipeline components with reference to the image format table stored in the pipeline storage component when it is judged that the input-side image format is not equal to the output-side image format by the image format identification section. The applicable pipeline component thus selected is operative to convert the input-side image format of the image data element to the output-side image format.

Each of the image data elements may have a monitor feature. The pipeline storage component may be operative to store therein a monitor feature table indicative of relationship between a plurality of monitor features and a plurality of pipeline components, and the pipeline section comprises: a plurality of pipeline components each for converting one of the monitor features of the image data elements.

The aforesaid control means comprises: a monitor feature identification section for receiving terminal format information indicative of an output-side monitor feature applicable to the input entity from the input entity, identifying an input-side monitor feature applicable to the output entity on the basis of the input data signal transmitted by the output entity, identifying the output-side monitor feature applicable to the input entity on the basis of the terminal format information, and judging whether the input-side monitor feature is equal to the output-side monitor feature, and a pipeline selecting section for selecting an applicable pipeline component applicable to convert the input-side monitor feature to the output-side monitor feature thus identified from among the pipeline components with reference to the monitor feature table stored in the pipeline storage component when it is judged that the input-side monitor feature is not equal to the output-side monitor feature by the monitor feature identification section. The aforesaid pipeline component thus selected may be operative to convert the input-side monitor feature of one of the image data elements to the output-side monitor feature.

In accordance with a second aspect of the present invention, the aforesaid relay server may further comprise: a plurality of shared memories including one shared memory and subsequent one or more shared memories each for temporally storing the data elements. The input entity may comprise a plurality of receiving terminals including one receiving terminal and subsequent one or more receiving terminals. One of the pipeline components is operative to convert a property of one of the data elements to be transmitted to the one of receiving terminal and store the one of the data elements, of which the property has been converted, in one of the shared memories, while the one of the pipeline components is operative to convert the property of subsequent one of the data elements to be transmitted to the subsequent one of receiving terminal, and store the subsequent one of the data elements, of which the property has been converted, in the subsequent shared memories.

Furthermore, the output entity may include a plurality of output apparatuses including one output apparatus and subsequent one or more output apparatuses. The plurality of pipeline components includes one pipeline component and subsequent one or more pipeline components. One of the pipeline components is operative to convert a property of one of the data elements received by the one output apparatus, and to store the one of the data elements, of which the property has been converted, in one of the shared memories, and subsequent one of the pipeline components is operative to convert a property of subsequent one of the data elements received by the subsequent output apparatus, and to store the one of the data elements, of which the property has been converted, in subsequent one of the shared memories.

The protocol conversion means may comprise a level setting section for setting a priority level to each of the data element. The protocol conversion means is operative to convert the data signal in accordance with the priority level set by the level setting section. The aforesaid relay server may further comprising clock means for measuring time. The protocol conversion means may be operative to receive a plurality of input data signals, to attach a time stamp to the input data signals at a predetermined time interval measured by the clock means, and to convert the input data signals into output data signals, and to transmit the output data signals to the input entity in synchronous with the time stamps.

The protocol conversion means nay comprise: an input-side protocol handler section including a plurality of input-side protocol handlers each for converting an input data signal in an input-side communications protocol into data elements. The control means comprises: a protocol storage section for storing therein a protocol table indicative of relationship between a plurality of communications protocols and a plurality of protocol handlers; a protocol identification section for identifying the input-side communications protocol on the basis of the input data signal transmitted by the output entity; a protocol selecting section for selecting an applicable input-side protocol handler applicable to the input-side communications protocol thus identified from among the input-side protocol handlers with reference to the protocol table stored in the protocol storage section. The control means may be operative to have the applicable input-side protocol handler thus selected convert the input data signal in the input-side communications protocol thus received into data elements.

The protocol conversion means may comprise: an output-side protocol handler section including a plurality of output-side protocol handlers each for converting data elements into an output data signal in an output-side communications protocol. The protocol identification section may be operative to identify the output-side communications protocol on the basis of the terminal protocol information received from the input entity, the protocol selecting section is operative to select an applicable output-side protocol handler applicable to the output-side communications protocol thus identified from among the output-side protocol handlers with reference to the protocol table stored in the protocol storage section. The control means may be operative to have the applicable output-side protocol handler convert the data elements into an output data signal in an output-side communications protocol, and transmit the output data signal in the output-side communications protocol thus converted.

In accordance with a third aspect of the present invention, there is provided relay server method comprising the steps of: (a) receiving an input data signal in an input-side protocol transmitted by an output entity, converting the input data signal in the input-side communications protocol into an output data signal in an output-side communications protocol applicable to an input entity, and transmitting the output data signal in the output-side communications protocol to the input entity; and (b) receiving terminal protocol information indicative of the output-side communications protocol applicable to the input entity from the input entity and controlling the step (a) in response to the terminal protocol information.

In accordance with a fourth aspect of the present invention, there is provided a relay server computer program product comprising a computer usable storage medium having computer readable code embodied therein, wherein the computer readable code comprising: a first program product code for receiving an input data signal in an input-side protocol transmitted by an output entity, converting the input data signal in the input-side communications protocol into an output data signal in an output-side communications protocol applicable to an input entity, and transmitting the output data signal in the output-side communications protocol to the input entity; and a second program product code for receiving terminal protocol information indicative of the output-side communications protocol applicable to the input entity from the input entity and controlling the first program product code in response to the terminal protocol information.

### BRIEF DESCRIPTION OF THE DRAWINGS

The present invention and many of the advantages thereof will be better understood from the following detailed description when considered in connection with the accompanying drawings, wherein:
FIG. 1 is a schematic block diagram showing a preferred embodiment of the relay server according to the present invention;
FIG. 2 is a block diagram of a session manager forming part of the relay server shown in FIG. 1;
FIG. 3 is a block diagram explaining the operation performed by an input-side protocol handler and an output-side protocol handler forming part of the relay server shown in FIG. 1;
FIG. 4 is a flowchart showing the flows of the process performed by a pipeline section forming part of the relay server shown in FIG. 1;
FIG. 5 is a table showing the relationship between a plurality of image formats and a plurality of pipeline components, and the relationship between a plurality of monitor features and a plurality of pipeline components stored in a pipeline database forming part of the relay server shown in FIG. 1;
FIG. 6 is a block diagram explaining the operation performed by the pipeline components in the pipeline section forming part of the relay server shown in FIG. 1;
FIG. 7 is a block diagram showing the structure of a shared memory in the pipeline section forming part of the relay server shown in FIG. 1;
FIG. 8 is a block diagram showing the operational relationship between the pipeline component and the shared memories in the pipeline section forming part of the relay server shown in FIG. 1;
FIG. 9 is a block diagram showing the operational relationship between the pipeline components and the shared memories in the pipeline section forming part of the relay server shown in FIG. 1;
FIG. 10 is block diagram showing the operational relationship between the input-side protocol handlers and clock means forming part of the relay server shown in FIG. 1;
FIG. 11 is a flowchart showing the flows of the image assembling process performed in the relay server shown in FIG. 1;
FIG. 12 is a block diagram explaining the priority setting process performed in the relay server shown in FIG. 1;
FIG. 13 is a flowchart showing the flows of the screening process performed in the relay server shown in FIG. 1;
FIG. 14 is a block diagram explaining communications protocol applied in the relay server shown in FIG. 1;
FIG. 15 is a set of authentication tables stored in the pipeline database forming part of the relay server shown in FIG. 1;
FIG. 16 is a flowchart showing the flows of the authentication process performed in the relay server shown in FIG. 1; and
FIG. 17 is schematic block diagram showing a second conventional moving image delivering system.

### DESCRIPTION OF THE PREFERRED EMBODIMENTS

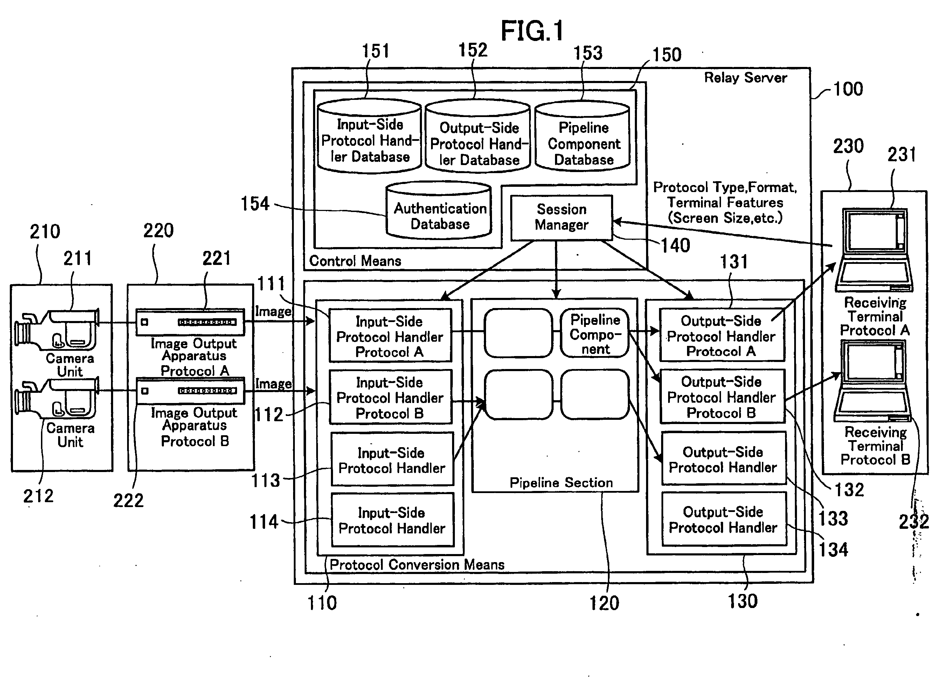

The preferred embodiment of the relay server 100 according to the present invention will be described hereinafter with reference to the drawings shown in FIGS. 1 to 16. Throughout the following detailed description, similar reference characters refer to similar elements in all figures of the drawings.

Referring now to FIG. 1 of the drawings, there is shown a moving picture delivering system comprising a camera unit group 210, an output entity 220, a preferred embodiment of a relay server 100 according to the present invention, and an input entity 230. The camera unit group 210 comprises a plurality of camera units, for example, camera units 211, 212. Each of the camera units 211, 212 is adapted to take a moving image to be converted to data signals. The output entity 220 is adapted to transmit the input data signals in respective communications protocols to the relay server 100. Preferably, the output entity 220 may comprise a plurality of image output apparatuses, for example, image output apparatuses 221, 222 respectively connected with the camera units 211, 212. The image output apparatus 221 is adapted to input the data signals taken and converted by the camera unit 211 and to output the data signals in an input-side communications protocol, for example, a protocol A to the relay server. The image output apparatus 222 is adapted to input the data signals taken and converted by the camera unit 212 and to output the data signals in an input-side communications protocol, for example, a protocol B to the relay server 100. The image output apparatuses 221, 222 are respectively conformable with the protocols A and B. The image output apparatus constitutes the output apparatus according to the present invention.

The relay server 100 is adapted to receive the data signals in respective input-side communications protocols from the output entity 220, to convert the data signals in the input-side communications protocols into the data signals in respective output-side communications protocols, and to transmit the data signals in the output-side communications protocols to the input entity 230. The input entity 230 is adapted to receive the data signals in the output-side communications protocols. Preferably, the input entity 230 may comprise a plurality of receiving terminals, for example, receiving terminals 231, 232. The receiving terminal 231 is adapted to receive the data signals in the communications protocol, for example, the protocol A from the relay server 100. The receiving terminal 232 is adapted to receive the data signals in the protocol B from the relay server 100. The receiving terminals 231, 232 are respectively conformable with the protocols A and B.

As shown in FIG. 1, the preferred embodiment of relay server 100 according to the present invention comprises protocol conversion means for receiving input data signals in input-side protocols transmitted by an output entity 220, converting the input data signals in the input-side communications protocols into output data signals in an output-side communications protocols applicable to an input entity 230, and transmitting the output data signals in the output-side communications protocols to the input entity 230; and control means for receiving terminal protocol information indicative of the output-side communications protocols applicable to the input entity 230 from the input entity 230 and controlling the protocol conversion means in response to the terminal protocol information. The input data signal in the input-side protocol may include, for example, image data elements, or voice data elements.

The operations performed by the protocol conversion means and the control means with respect to a data signal in a single communications protocol will be described hereinlater with reference to the drawings shown in FIG. 1 for easily understanding of and simplifying explanation of the relay server 100 according to the present invention.

The protocol conversion means is operated to receive an input data signal in an input-side communications protocol, for example, a protocol A, transmitted by the output entity 220, convert the input data signal in the input-side communications protocol into an output data signal in an output-side communications protocol, for example, a protocol B, applicable to an input entity 230, and transmit the output data signal in the output-side communications protocol, i.e., a protocol B, to the input entity 230.

The control means is operated to receive terminal protocol information indicative of the output-side communications protocols, i.e., the protocols B applicable to the input entity 230 from the input entity 230 and control the protocol conversion means in response to the terminal protocol information.

While it has been described in the above that the relay server 100 input an input data signal in a single input-side communications protocol transmitted by the output entity 220 and output an output data signal in a single output-side communications protocol, the relay server 100 according to the present invention may input data signals in respective input-side communications protocols transmitted by a plurality of image output apparatuses of the output entity and transmit output data signals in respective output-side communications protocols to a plurality of receiving terminals of the input entity 230 in the same manner as shown in FIG. 1.

The relay server 100 thus constructed can receive and transmit data signals between a plurality of image output apparatuses and a plurality of receiving terminals regardless of whether the image output apparatuses and the receiving terminals respectively share the same communications protocols or not.

The protocol conversion means comprises an input-side protocol handler section 110 and an output-side protocol handler section 130 as shown in FIG. 1.

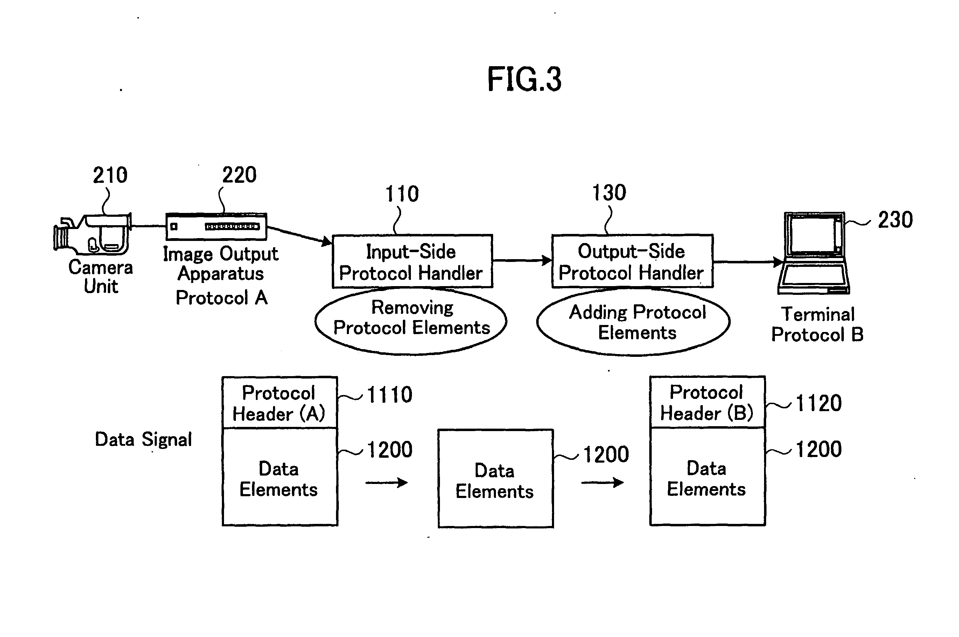

The description hereinlater will be directed to the operation performed by the input-side protocol handler section 110 and the output-side protocol handler section 130 with reference to the drawings shown in FIG. 3.

As best shown in FIG. 3, a data signal is composed of a protocol header 1110 and data elements 1200. This means that the input data signal in the input-side communications protocol, for example, a protocol A includes a protocol header (A) and data elements, and the output data signal in the output-side communications protocol, for example, a protocol B includes a protocol header (B) and data elements. The input-side protocol handler section 110 is operative to receive the input data signal in the input-side communications protocol, i.e., a protocol A, from the output entity 220, and remove the protocol header (A) from the input data signal in the protocol A to extract data elements. The output-side protocol handler section 130 is operative to receive data elements, and synthesize a protocol header (B) and the data elements to generate the output data signal in an output-side communications protocol, i.e., a protocol B. The input-side protocol handler section 110, the output-side protocol handler section 130, and the protocol header constitute the protocol removing section, the protocol synthesizing section, and the protocol element according to the present invention, respectively.

The relay server 100 thus constructed can receive and transmit data signals between an output entity and an input entity regardless of whether the output entity and the input entity share the same communications protocol or not, without changing data elements contained in the data signal.

The control means further comprises a session manager 140, and a database section 150 as shown in FIG. 1.

The description hereinlater will be directed to the output-side protocol handler section 130 in combination with the session manager 140 and the database section 150 with reference to the drawings shown in FIGS. 1 to 3.

The output-side protocol handler section 130 includes a plurality of output-side protocol handlers, for example, output-side protocol handlers 131, 132, 133, 134 as shown in FIG. 1. Each of the output-side protocol handlers 131, 132, 133, 134 is adapted to convert data elements into an output data signal in an output-side communications protocol. This means that each of the output-side protocol handlers 131, 132, 133, 134 is adapted to input the data elements, and synthesize a protocol header to the data elements to generate the output data signal in the output-side communications protocol.

As shown in FIG. 1, the database section 150 comprises an input-side protocol handler database 151, an output-side protocol handler database 152, a pipeline component database 153, and an authentication database 154. The output-side protocol handler database 152 is adapted to store therein a protocol table 142 indicative of relationship between a plurality of output-side communications protocols and a plurality of output-side protocol handlers, for example, the output-side protocol handlers 131, 132, 133, 134, which will be described later. The output-side protocol handler database 152 partly constitutes the protocol storage section according to the present invention.

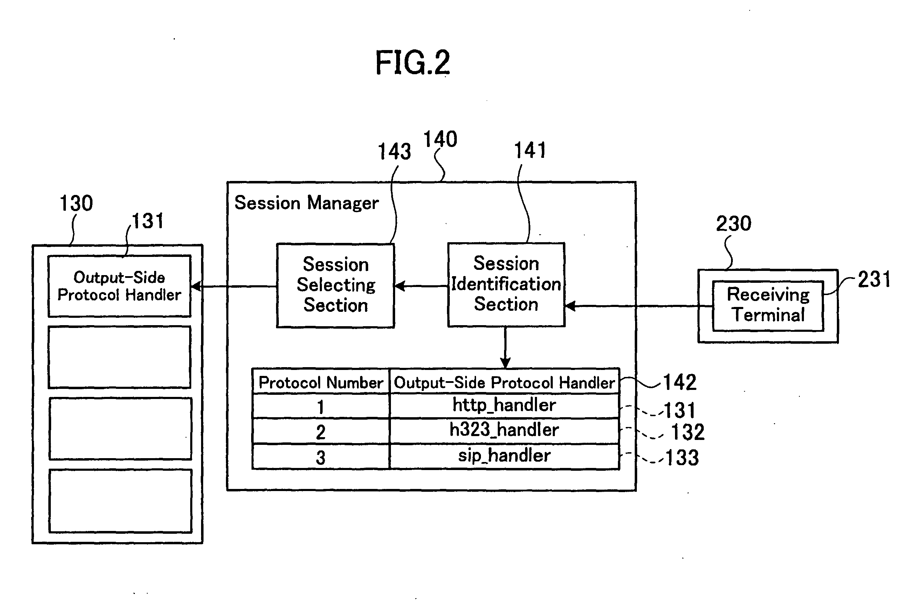

The session manager 140 includes a protocol identification section 141, and a protocol selecting section 143 as shown in FIG. 2. The protocol identification section 141 is adapted to receive the terminal protocol information from the input entity 230, and identify the output-side communications protocol applicable to the input entity 230 on the basis of the terminal protocol information received from the input entity 230. The protocol selecting section 143 is operative to select an applicable output-side protocol handler, for example, the output side protocol handler 131, applicable to the output-side communications protocol thus identified from among the output-side protocol handlers, for example, the output-side protocol handlers 131, 132, 133, 134 with reference to the protocol table 142 stored in the output-side protocol handler database 152.

The session manager 140 is operative to have the applicable output-side protocol handler, i.e., the output-side protocol handler 131, convert the data elements into the output data signal in the output-side communications protocol applicable to the input entity 230, and the session manager 140 is then operative to have the applicable output-side protocol handler, i.e., the output-side protocol handler 131, transmit the output data signal in the output-side communications protocol thus converted.

The operation of the output-side protocol handler section 130 in combination with the session manager 140 and the database section 150 will be described in detail with reference to the drawings shown in FIG. 2.

It is assumed that the input entity 230 includes a plurality of receiving terminals, for example, a receiving terminals 231, 232, 233 respectively conformable with different communications protocols, and the relay server 100 transmits data elements to, for example, the receiving terminal 231 of the input entity 230. As shown in FIG. 2, the protocol table 142 indicates the relationship between a plurality of output-side communications protocols, for example, protocol No. 1, No. 2,... and a plurality of output-side protocol handlers 131, 132, 133, for example, "http_handler", "h323_handler", "sip_handler".

The protocol identification section 141 of the session manager 140 is operated to identify the output-side communications protocol, for example, protocol No. 1, on the basis of the terminal protocol information received from the receiving terminal 231. The protocol selecting section 143 is operated to select an applicable output-side protocol handler, for example, the output side protocol handler 131, i.e., "http_handler", applicable to the output-side communications protocol, i.e., protocol No.1, thus identified from among the output-side protocol handlers 131, 132, 133 of the output-side protocol hander section 130 with reference to the protocol table 142 stored in the output-side protocol handler database 152.

The session manager 140 is operated to have the applicable output-side protocol handler, i.e., the output-side protocol handler 131, i.e., "http_handler", convert the data elements into an output data signal in the output-side communications protocol, i.e., protocol No. 1. The session manger 140 is then operated to have the applicable output-side protocol handler 131, "http_handler", transmit the output data signal in the output-side communications protocol thus converted.

This means that the applicable output-side protocol handler 131, "http_handler", is operated to input the data elements and synthesize a protocol header and the data elements to generate the output data signal in the output-side communications protocol.

The relay server 100 thus constructed can receive and transmit data signals between an output entity and an input entity including a plurality of receiving terminals respectively conformable with different communications protocols regardless of whether the output entity and the receiving terminals share the same communications protocol or not.

The description hereinlater will be directed to the output-side protocol handler section 110 in combination with the session manager 140 and the database section 150 with reference to the drawings shown in FIGS. 1 to 3.

The input-side protocol handler section 110 includes a plurality of input-side protocol handlers, for example, the input-side protocol handlers 111, 112, 113, 114. Each of the input-side protocol handlers 111, 112, 113, 114 is adapted to convert an input data signal in an input-side communications protocol into data elements. This means that each of input-side protocol handlers 111, 112, 113, 114 is operative to input the input data signal in the input-side communications protocol thus received, and remove the protocol header from the input data signal in the input-side communications protocol to extract the data elements.

The control means further comprises an input-side protocol hander database 151. The input-side protocol hander database 151 is adapted to store therein a protocol table indicative of relationship between a plurality of communications protocols and a plurality of input-side protocol handlers 111, 112, 113, 114. The input-side protocol handler database 151 partly constitutes the protocol storage section according to the present invention. Similar to the protocol table 142 shown in FIG. 2, the protocol table stored in the input-side protocol handler database 151 indicates the relationship between a plurality of communications protocols and a plurality of input-side protocol handlers 111, 112, 113, 114, for example, "http_handler", "h323_handler", "sip_handler, etc.

The protocol identification section 141 is operative to identify the input-side communications protocol on the basis of the input data signal transmitted by the output entity 220. The protocol selecting section 143 is operative to select an applicable input-side protocol handler, for example, the input-side protocol handler 111, applicable to the input-side communications protocol thus identified from among the input-side protocol handlers 111, 112, 113, 114 with reference to the protocol table stored in the input-side protocol hander database 151.

The session manager 140 is operative to have the applicable input-side protocol handler, i.e., the input-side protocol handler 111 thus selected, convert the input data signal in the input-side communications protocol thus received into data elements. The input-side protocol handler database 151 and the input-side protocol handler database 151 collectively constitute the protocol storage section according to the present invention.

The operation of the session manager 140 and the input-side protocol handler section 110 in the case that the relay server 100 receives a plurality of input data signals in respective input-side communications protocols from the output entity 220 will be described in detail with the drawings shown in FIG. 1. The operation of the session manager 140 and the input-side protocol handler section 110 is similar to that of the session manager 140 and the output-side protocol handler section 130 except for the fact that the protocol identification section 141 is operative to identify the input-side communications protocols on the basis of the input data signals transmitted by the output entity 220.

The relay server 100 is assumed to receive, for example, a plurality of input data signals in respective input-side communications protocols, for example, protocols A, B, respectively from a plurality of image output apparatuses, for example, a plurality of image output apparatuses 221, 222 of the output entity 220.

The protocol identification section 141 is operated to identify the input-side communications protocols, i.e., protocols A, B on the basis of the input data signals transmitted by the image output apparatuses 221, 222. The protocol selecting section 143 is operated to select applicable input-side protocol handlers, for example, the input-side protocol handler 111, 112, applicable to the input-side communications protocols, i.e., protocols A, B thus identified from among the input-side protocol handlers 111, 112, 113, 114 with reference to the protocol table stored in the input-side protocol hander database 151.

The session manager 140 is operated to have the applicable input-side protocol handlers, i.e., the input-side protocol handlers 111, 112 thus selected, convert the input data signals in the input-side communications protocols, i.e., protocols A, B thus received into data elements. This means that the applicable input-side protocol handlers 111. 112 are operated to input the input data signal in the input-side communications protocols, i.e., protocols A, B, thus received and remove the protocol header from the input data signal in the input-side communications protocol to extract the data elements.

The relay server 100 thus constructed can receive and transmit data signals between an output entity including a plurality of image output apparatuses respectively conformable with different communications protocols and an input entity regardless of whether the image output apparatuses and the input entity share the same communications protocol or not.

From the foregoing description, it is to be understood that the relay server 100 according to the present invention can receive and transmit the data signals between a plurality of image output apparatuses and a plurality of receiving terminals regardless of whether the image output apparatuses and the receiving terminals respectively share the same communications protocol and properties or not.

The protocol conversion means further comprises a pipeline section 120 as shown in FIG. 1. Each of the data elements may have a plurality of properties. The properties may include, for example but not limited to, an image format, a monitor feature, an image resolution, a color number, etc. The pipeline section 120 is adapted to input the data elements extracted by the input-side protocol handler section 110, convert the properties of the data elements thus inputted, and output the data elements having properties thus converted to the output-side protocol handler section 130.

The relay server 100 comprising the pipeline section for converting the properties of the data elements, and outputting the data elements having properties thus converted to the output-side protocol hander section makes it possible for an output entity and an input entity to receive and transmit data signals between them regardless of whether the image output apparatuses and the input entity share the same properties of the data elements or not.

The description hereinlater will be directed to the pipeline section 120 in combination with the session manager 140 and the database 150.

The data elements may include image data elements respectively having properties such as, for example, image formats. The pipeline section 120 comprises a plurality of pipeline components, for example, pipeline components 121, 122, 123. Each of the pipeline components 121, 122, 123 is adapted to convert the image format of the image data element.

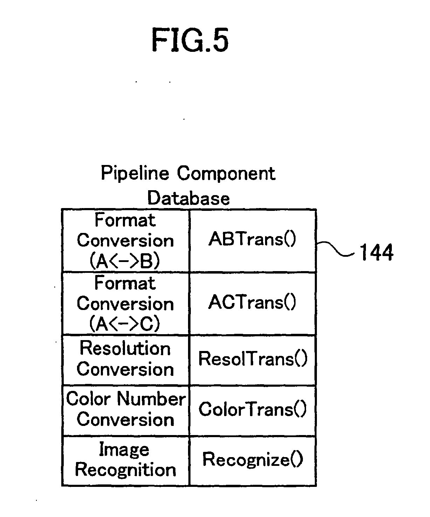

The database section 140 further comprises a pipeline component database 153 as shown in FIG. 1. The pipeline component database 153 is adapted to store therein an image format table 144 indicative of relationship between a plurality of image formats and a plurality of pipeline components 121, 122, 123 as shown in FIG. 5. The pipeline component database 153 partly constitutes the pipeline storage component according to the present invention.

The session manager 140 includes an image format identification section, not shown, and a pipeline selecting section, not shown.

The image format identification section is adapted to receive receiving terminal format information indicative of an output-side image format applicable to the input entity 230 from the input entity 230, identify an input-side image format applicable to the output entity 220 on the basis of the input data signal transmitted by the output entity 220, identify the output-side image format applicable to the input entity 230 on the basis of the terminal format information, and judge whether the input-side image format is equal to the output-side image format. When it is judged that the input-side image format is not equal to the output-side image format by the image format identification section, the pipeline selecting section is adapted to select an applicable pipeline component, for example, the pipeline component 121, applicable to convert the input-side image format to the output-side image format thus identified from among the pipeline components, for example, pipeline components 121, 122, 123, with reference to the image format table 144 stored in the pipeline component database 153. The applicable pipeline component 121 thus selected is operative to convert the input-side image format of the image data element to the output-side image format.

The operation to convert the input-side image format of the image data element to the output-side image format performed by the pipeline section 120 in combination with the session manager 140 and the database 150 will be described with reference to FIG. 5, hereinlater.

The image format identification section is operated to receive receiving terminal format information indicative of an output-side image format applicable to the input entity 230 from the input entity 230, identify an input-side image format, for example, "format A", applicable to the output entity 220 on the basis of the input data signal transmitted by the output entity 220, identify the output-side image format, for example, "format B", applicable to the input entity 230 on the basis of the terminal format information, and judge whether the input-side image format is equal to the output-side image format or not.

When it is judged by the image format identification section that the input-side image format is not equal to the output-side image format, the pipeline selecting section is operated to select an applicable pipeline component, i.e., the pipeline component 121, "ABTrans()", applicable to convert the input-side image format, "format A", to the output-side image format, "format B", thus identified from among the pipeline components, i.e., pipeline components 121, 122, 123, with reference to the image format table 144 stored in the pipeline component database 153 as shown in FIG. 5. The applicable pipeline component 121, i.e., "ABTrans()", thus selected is operative to convert the input-side image format, "format A" of the image data element to the output-side image format, "format B".

As will be seen from the foregoing description, it is to be understood that the relay server 100 comprising the pipeline section 120 for converting the image format of the data elements and outputting the data elements having image format thus converted to the output-side protocol hander section 130, and the session manager 140 and the database 150 for having the pipeline section 120 convert the input-side image format of the data elements to the output-side image format applicable to the output-side protocol hander section 130 makes it possible for an output entity 220 and an input entity 230 to receive and transmit data signals between them regardless of whether the output entity 220 and the input entity 230 share the same image format of the data elements.

Furthermore, each of the data elements may include a monitor feature such as, for example, an image resolution, and a color number. The color number herein used is intended to mean the maximum number of colors to be displayed in a monitor.

The pipeline component database 153 is operative to store therein a monitor feature table 144 indicative of relationship between a plurality of monitor features and a plurality of pipeline components, for example, the pipeline components 121, 122, 123, and the pipeline section 120 comprises: a plurality of pipeline components, i.e., the pipeline components 121, 122, 123 each for converting one of the monitor features of the image data elements.

The session manager 140 further includes a monitor feature identification section, not shown, and a pipeline selecting section, not shown.

The monitor feature identification section is adapted to receive terminal format information indicative of an output-side monitor feature applicable to the input entity 230 from the input entity 230, identify an input-side monitor feature applicable to the output entity 220 on the basis of the input data signal transmitted by the output entity 220, identify the output-side monitor feature applicable to the input entity 230 on the basis of the terminal format information, and judge whether the input-side monitor feature is equal to the output-side monitor feature or not.

When it is judged by the monitor feature identification section that the input-side monitor feature is not equal to the output-side monitor feature, the pipeline selecting section is adapted to select an applicable pipeline component applicable to convert the input-side monitor feature to the output-side monitor feature thus identified from among the pipeline components, i.e., pipeline components 121, 122, 123, with reference to the monitor feature table 144 stored in the pipeline component database 153 as shown in FIG. 5. The pipeline component thus selected is, then, operative to convert the input-side monitor feature of one of the image data elements to the output-side monitor feature.

The description hereinlater will be directed to the operation to convert the input-side monitor feature of the image data element into the output-side monitor feature performed by the session manager 140 and the pipeline section 120 with reference to FIG. 5. The pipeline component database 153 is operative to store therein a monitor feature table 144 indicative of relationship between a plurality of monitor features, for example, an image resolution, a color number, and a plurality of pipeline components 121, 122, 123, i.e., ResolTrans(), ColorTrans(), Recognize(), and the pipeline section 120 comprises: a plurality of pipeline components 121, 122, 123, for example, ResolTrans(), ColorTrans(), Recognize(), each for converting one of the monitor features of the image data elements as shown in FIG. 5.

The monitor feature identification section is operated to receive terminal format information indicative of an output-side monitor feature applicable to the input entity 230 from the input entity 230, identify an input-side monitor feature, for example, an input-side image resolution, applicable to the output entity 220 on the basis of the input data signal transmitted by the output entity 220, identify the output-side monitor feature, for example, an output-side image resolution, applicable to the input entity 230 on the basis of the terminal format information, and judge whether the input-side monitor feature, i.e., input-side image resolution, is equal to the output-side monitor feature, i.e., output-side image resolution or not.

When it is judged that the input-side monitor feature, i.e., input-side image resolution, is not equal to the output-side monitor feature, i.e., output-side image resolution, the pipeline selecting section is operated to select an applicable pipeline component, for example, pipeline component 121, "ResolTrans()", applicable to convert the input-side monitor feature, i.e., input-side image resolution, to the output-side monitor feature, output-side image resolution, thus identified from among the pipeline components, i.e., pipeline components 121, 122, 123, with reference to the monitor feature table 144 stored in the pipeline component database 153. The applicable pipeline component, i.e., the pipeline component 121, "ResolTrans()", thus selected is, then, operated to convert the input-side monitor feature, i.e., the input-side image resolution, of one of the image data elements to the output-side monitor feature. i.e., the output-side image resolution.

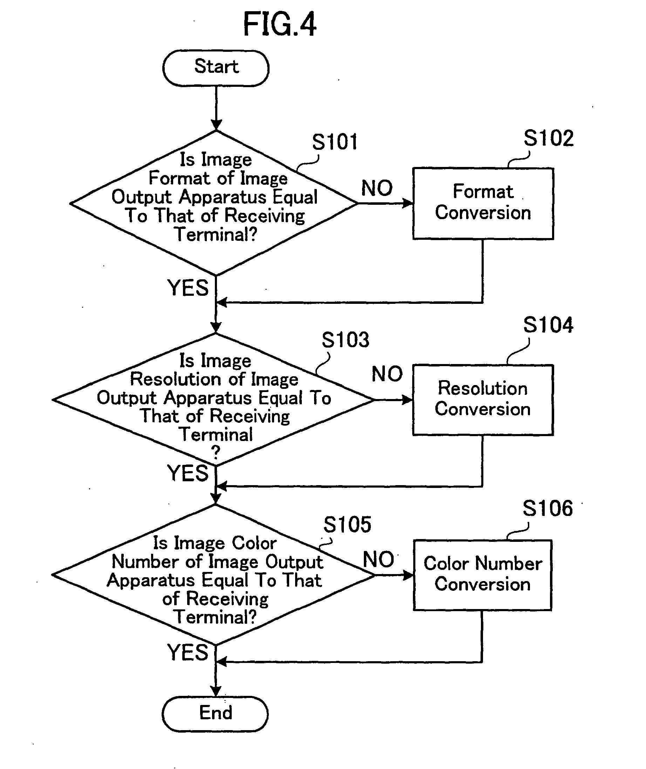

The operation to convert an input-side image format, and a plurality of input-side monitor features, for example, image resolution and color number, of the image data element to an output-side image format, and a plurality of output-side monitor features, i.e., image resolution and color number, performed by the session manager 140 and the pipeline section 120 will be described with reference to FIG. 4, hereinlater.

In the step S101, the session manager 140 is operated to judge whether the input-side image format, for example, the image format of an image output apparatus, is equal to the output-side image format, for example, the image format of a receiving terminal. If it is judged that the image format of the image output apparatus is equal to the image format of the receiving terminal, the step S101 goes forward to the step S103. Otherwise the step S101 goes forward to the step S102 in which the input-side image format is converted to the output-side image format. The step S102 goes forward to the step S103.

In the step S103, the session manager 140 is operated to judge whether the input-side image resolution, i.e., the image resolution of the image output apparatus, is equal to the output-side image resolution, i.e., the image resolution of the receiving terminal. If it is judged that the image resolution of the image output apparatus is equal to the image resolution of the receiving terminal, the step S103 goes forward to the step S105. Otherwise the step S103 goes forward to the step S104 in which the input-side image resolution is converted to the output-side image resolution. The step S104 goes forward to the step S105.

In the step S105, the session manager 140 is operated to judge whether the input-side color number, i.e., the color number of the image output apparatus, is equal to the output-side color number, i.e., the color number of the receiving terminal. If it is judged that the color number of the image output apparatus is equal to the color number of the receiving terminal, the step S105 goes forward to the step End. Otherwise the step S105 goes forward to the step S106 in which the input-side color number is converted to the output-side color number. The step S106 goes forward to the step End.

According to the present invention, the monitor feature may further include a coding system such as, for example, JPEG, MPEG, and H263. Though it has been described in the foregoing description that the input data signal in the input-side protocol include image data elements, the relay server 100 according to the present invention may receive and process the input data signal in the input-side protocol including voice data elements in a similar manner as described in the above. The monitor feature of the voice data elements may include a coding system such as, for example, G711, G723.1, G726, G728, G729, and sound sampling frequencies.

As will be seen from the foregoing description, it is to be understood that the relay server 100 comprising the pipeline section 120 for converting the properties, including the image format and monitor features, of the data elements and outputting the data elements having properties thus converted to the output-side protocol hander section 130, and the session manager 140 and the database 150 for having the pipeline section 120 convert the input-side properties of the data elements to the output-side properties applicable to the output-side protocol hander section 130 makes it possible for a plurality of image output apparatuses and a plurality of receiving terminals to receive and transmit data signals between them regardless of whether the image output apparatuses and the receiving terminals respectively share the same properties of the data elements or not.

The pipeline section 120 comprises a plurality of shared memories. The description hereinlater will be directed to the shared memories in combination with the pipeline components.

The processes performed by the pipeline components in combination with the shared memories will be described hereinlater.

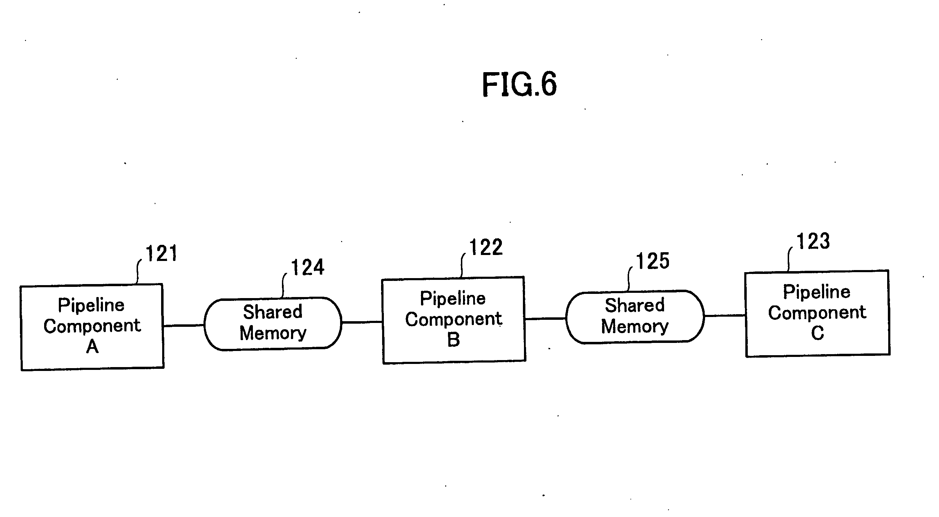

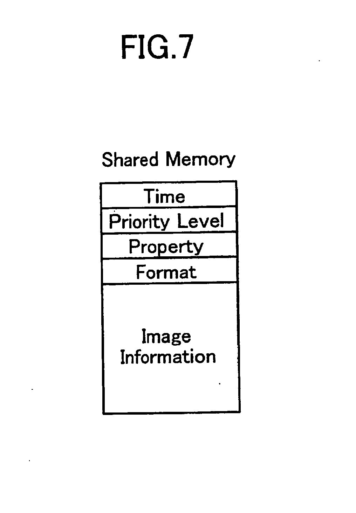

In FIG. 6, the pipeline component A, 121, is adapted to convert a property, for example, an input-side image format of the image data element to the output-side image format, the pipeline component B, 122, is adapted to convert, for example, an input-side image resolution of the image data element to the output-side image resolution, and the pipeline component C, 123, is adapted to convert, for example, an input-side color number of the image data element to the output-side color number. The shared memories 124, 125 are adapted to temporally store the image data elements. The structure of a shared memory is shown in FIG. 7 as comprising a time sector for storing time information, a priority level sector for storing priority level information, a property sector for storing property information, a format sector for storing format information, and an image information sector for storing image information. This means that the shared memory is capable of storing information about elements such as, for example, a time, a priority level, a property, a format, and an image.

The operation of converting the image format, the image resolution, and the color number performed by the pipeline components 121, 122, 123 in combination with the shared memories 124, 125 will be described with reference to the drawing shown in FIG. 6.

The pipeline component A, 121, is operated to input the image data element, and convert the input-side image format of the image data element to the output-side image format and the store the image data element in the shared memory 124. The pipeline component B, 122, is operated to input the image data element from the shared memory 124, convert the input-side image resolution of the image data element to the output-side image resolution, and store the image data element in the shared memory 125. The pipeline component C, 123, is operated to input the data elements from the shared memory 125, convert the input-side color number of the image data element to the output-side color number.

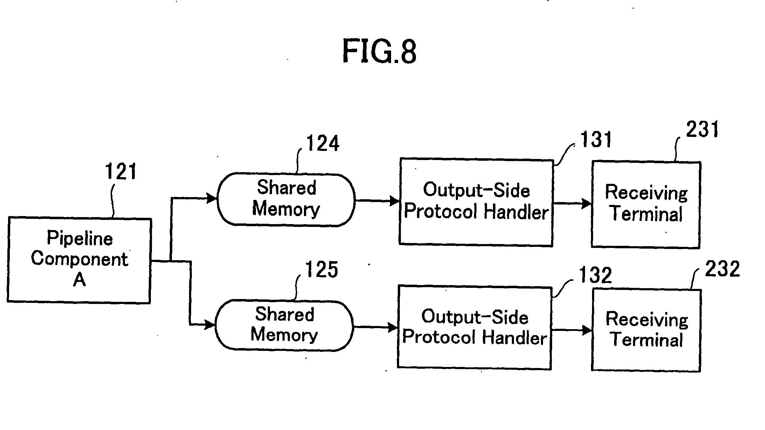

The process of converting the property of the data elements performed by the pipeline components in combination with the shared memories in the case that the input entity comprises a plurality of receiving terminals will be described with reference to the drawing shown in FIG. 8.

The input entity 230 may comprise a plurality of receiving terminals including one receiving terminal, for example, the receiving terminal 231 and subsequent one or more receiving terminals, for example, the receiving terminal 232.

The pipeline section 120 comprises a plurality of shared memories including, for example, one shared memory 124, and subsequent one or more shared memories, for example, the subsequent shared memory 125, each for temporally storing the data elements. One of the pipeline components, for example, the pipeline component A, 121 is operated to convert a property of one of the data elements to be transmitted to the one of receiving terminal, for example, the receiving terminal 231, and store the one of the data elements, of which the property has been converted, in one of the shared memories, for example, the shared memory 124. While, on the other hand, the pipeline component 121 is operated to convert the property of subsequent one of the data elements to be transmitted to the subsequent one of receiving terminal, i.e., the receiving terminal 232, and store the subsequent one of the data elements, of which the property has been converted, in the subsequent shared memories 125.

The relay server 100 in which the pipeline component 121 stores the data elements in a plurality of shared memories 124, 125, and the output-side protocol handlers 131, 132 respectively convert the data elements from the shared memories 124, 125 into the output-side data signal in the output-side communications protocol respectively to be transmitted to the receiving terminals 231, 232, does not need to increase the number of pipeline components 121 although the number of receiving terminal may increase, thereby preventing the increase in the amount of the data signals received from the output entity 220.

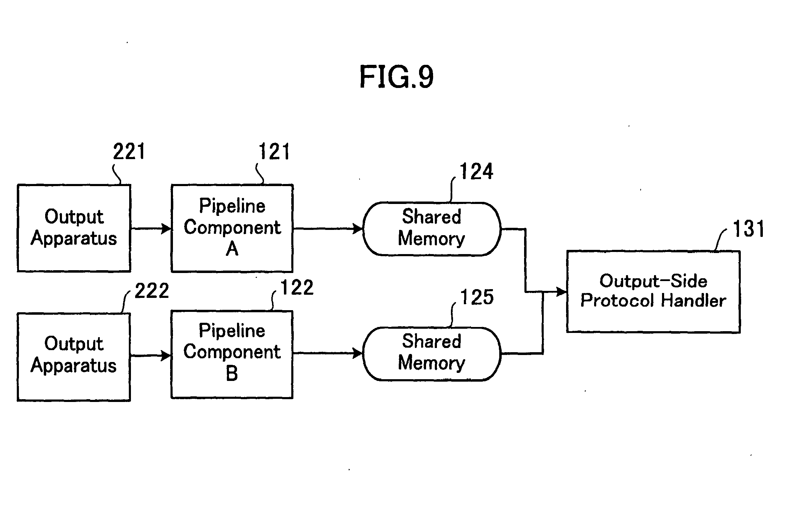

The process of converting the property of the data elements performed by the pipeline components in combination with the shared memories in the case that the input entity comprises a plurality of image output apparatuses will be described with reference to the drawing shown in FIG. 9.

The output entity 220 may comprise a plurality of image output apparatuses including one image output apparatus, for example, the image output apparatus 221 and subsequent one or more image output apparatuses, for example, the image output apparatus 222. The pipeline section 120 comprises a plurality of shared memories including one shared memory, for example, the shared memory 124 and subsequent one or more shared memories, for example, the shared memory 125, each for temporally storing the data elements. The plurality of pipeline components includes one pipeline component, for example, the pipeline component 121 and subsequent one or more pipeline components, for example, the pipeline component 122.

The one of the pipeline components, i.e., the pipeline component 121 is operative to convert a property of one of the data elements received by the one image output apparatus 221, and to store the one of the data elements, of which the property has been. converted, in one of the shared memories, i.e., the shared memory 124. While, on the other hand, the subsequent one of the pipeline components, i.e., the pipeline component 122 is operative to convert a property of subsequent one of the data elements received by the subsequent image output apparatus 222, and to store the one of the data elements, of which the property has been converted, in subsequent one of the shared memories, i.e., the shared memory 125.

The relay server 100 in which the output entity 220 comprises a plurality of image output apparatuses, the pipeline component 121 converts a property of the data elements received by one image output apparatus 221 and stores the data elements in the shared memory 124 while the subsequent pipeline component 122 converts a property of subsequent one of the data element received by the subsequent image output apparatus 222 and stores the data elements in the subsequent shared memory 125, makes it possible for the output-side protocol handler 131 to multiplex the data elements inputted from the shared memories 124, 125 into multiplex multiplexed data elements to be transmitted to the input entity 230, though the number of image output apparatuses may increase, thereby preventing the increase in the amount of the data signals received from the output entity 220, thereby preventing the increase in the amount of the data signals to be transmitted to the input entity 230.

The relay server 100 according to the present invention may comprise clock means 160 for measuring time. The clock means 160 may be included in, for example, the session manager 140.

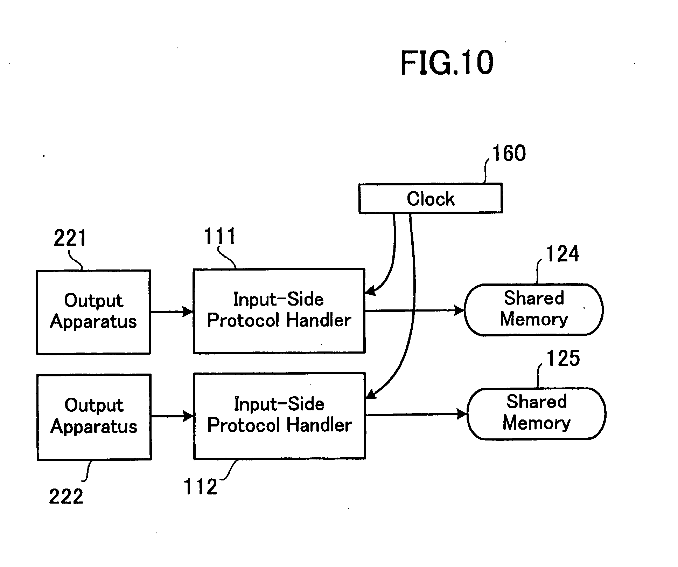

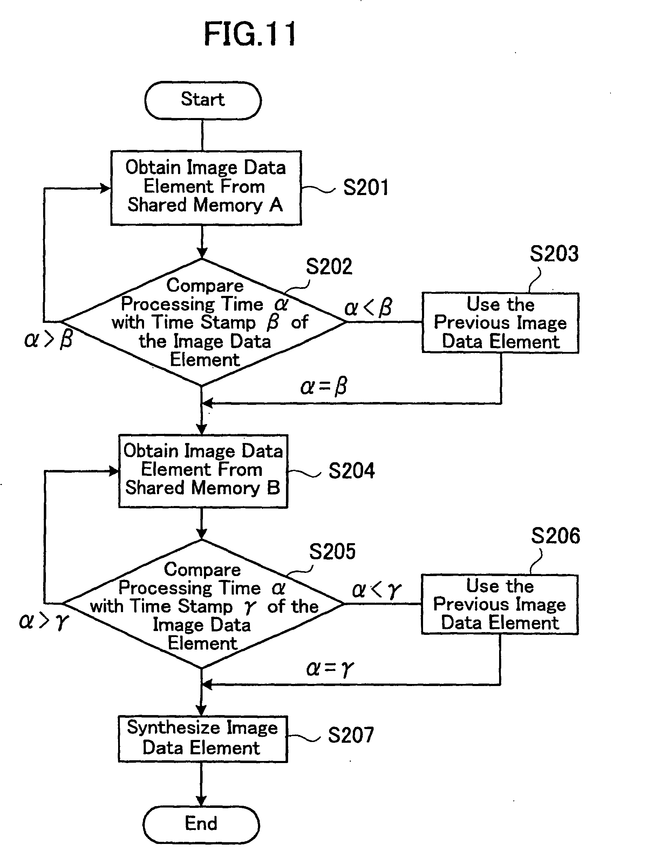

The description hereinlater will be directed to the clock mean with reference to the drawings shown in FIGS. 10, 11.

The clock means 160 is adapted to measure time. The protocol conversion means may receive a plurality of input data signals from an output entity 220 comprising a plurality of image output apparatuses, for example, image output apparatuses 221, 222. The protocol conversion means is then operative to attach a time stamp to the input data signals at a predetermined time interval measured by the clock means 160, and to convert the input data signals into output data signals, and to transmit the output data signals to the input entity 230 in synchronous with the time stamps.

More specifically, the input-side protocol handlers, for example, the input-side protocol handlers 111, 112, are adapted to attach a time stamp to the input data signals at a predetermined time interval of, for example, one frame time, measured by the clock means 160 and to convert the input data signals into data elements. The data elements thus converted by the input-side protocol handler 111, 112 retain the time stamps. Each of the image output apparatuses constituting the output entity 220 may comprise clock means uniquely measuring a time. This means that the input data signals inputted by the plurality of image output apparatuses of the output entity 220 may respectively indicate different times. The relay server 100 thus constructed can attach a time stamp to the data elements in accordance with the time measured by the clock means 160 regardless of what time the image output apparatuses of the output entity 220 may respectively indicate. The pipeline section 120 and the output-side protocol handler section 130 are operative to process the data elements in response to the time stamps attached by the input-side protocol handler in accordance with the time measured by the clock means 160.

The operations of the pipeline components and the output-side protocol handlers in combination with the clock means 160 will be described with reference to the drawings shown in FIG. 11. The pipeline section 120 comprises a plurality of shared memories, including, for example, shared memory A, and shared memory B. The input-side protocol handlers are operated to input the data signals, attach a time stamp to each of the input data signals at a predetermined time interval measured by the clock means 160, convert the input data signals into data elements, and store the data elements in, for example, the shared memories A, B, C.

In the step S201, the pipeline components or the output-side protocol handlers obtain an image data element from the shared memory A. The step S201 goes forward to the step S202 in which the time, "β", indicated by the time stamp attached to the image data element is compared with the processing time, "α", estimated by the pipeline components or the output-side protocol handlers. If it is judged that the time, "β", indicated by the time stamp attached to the image data element is earlier than the processing time, "α", the step S202 returns to the step S201 in which the pipeline components or the output-side protocol handlers obtain a subsequent image data element, viz., an image data element subsequent to the image data element from the shared memory A. If it is judged that the time, "β", indicated by the time stamp attached to the image data element is later than the processing time, "α", the step S202 goes forward to the step S203 in which the pipeline components or the output-side protocol handlers obtain a previous image data element, viz., an image data element previous to the image data element from the shared memory A. The step S203 goes forward to the step S204.

If it is judged that the time, "β", indicated by the time stamp attached to the image data element is equal to the processing time in the step S202, "α", the step S202 goes forward to the step S204 in which the pipeline components or the output-side protocol handlers obtain an image data element from the shared memory B. The step S204 goes forward to the step S205 in which the time, "γ", indicated by the time stamp attached to the image data element is compared with the processing time, "α". If it is judged that the time, "γ", indicated by the time stamp attached to the image data element is earlier than the processing time, "α", the step S205 returns to the step S204 in which the pipeline components or the output-side protocol handlers obtain a subsequent image data element, viz., an image data element subsequent to the image data element from the shared memory B. If it is judged that the time, "γ", indicated by the time stamp attached to the image data element is later than the processing time, "α", the step S205 goes forward to the step S206 in which the pipeline components or the output-side protocol handlers obtain a previous image data element, viz., an image data element previous to the image data element from the shared memory B. The step S206 goes forward to the step S207. If it is judged that the time, "γ", indicated by the time stamp attached to the image data element is equal to the processing time, "α", the step S205 goes forward to the step S207 in which the pipeline components or the output-side protocol handlers synthesize the image data elements thus obtained from the shared memories A, B.

The relay server 100 according to the present invention comprising clock means 160 for measuring time, in which the input-side protocol handler section 110 are operative to attach a time stamp to the input data signals at a predetermined time interval measured by the clock means 160 and to convert the input data signals into data element, the pipeline section 120 and the output-side protocol handler section 130 are operative to process the data elements in response to the time stamp attached by the input-side protocol handler in accordance with the time measured by the clock means 160 makes it easy for the pipeline section 120 and the output-side protocol handler section 130 of the relay server 100 to synchronize and process the data elements regardless of what time the image output apparatuses of the output entity 220 may respectively indicate, so that the relay server 100 can properly process the data signals even though the amount of the data signals may increase.

The protocol conversion means may further comprises a level setting section for setting a priority level to each of the data element. The protocol conversion means is operative to convert the data signal in accordance with the priority level set by the level setting section.

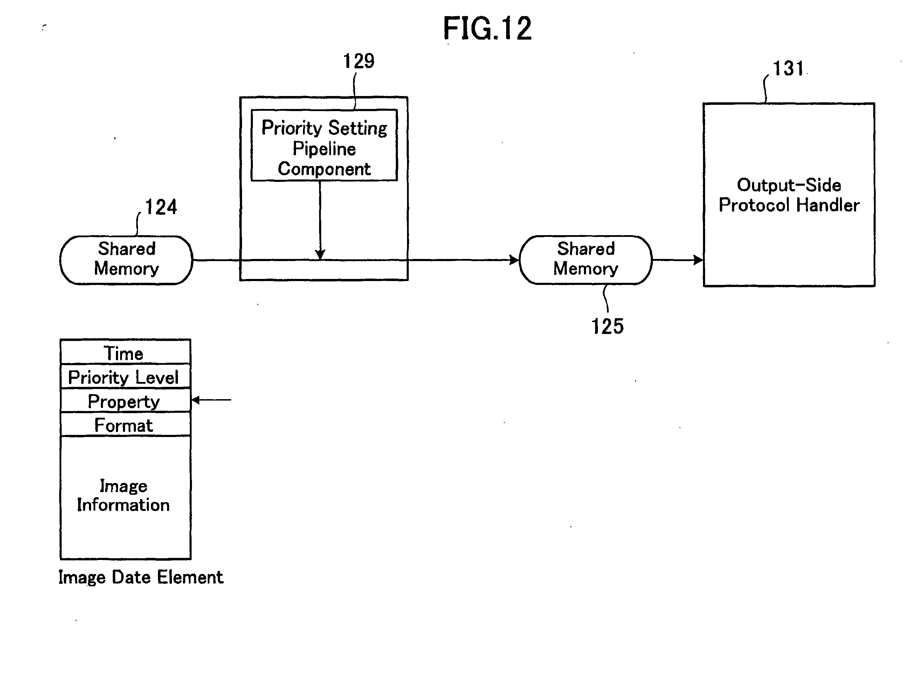

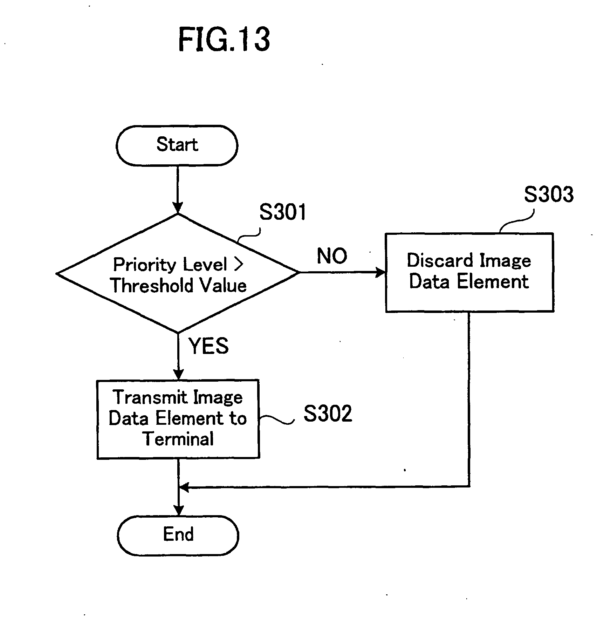

The priority level setting and screening processes performed by the pipeline components and the output-side protocol handlers will be described with reference to the drawings shown in FIGS. 12, 13.

The pipeline section 120 comprises a priority setting pipeline component 129. The priority setting pipeline component 129 is adapted to input the image data element from the shared memory 124, and compare each of the image data elements with a predetermined image pattern to determine a degree of match how well the image data element matches with the image pattern. The image pattern may be determined by, for example, user's preference. The priority setting pipeline component 129 is adapted to set a priority level to the image data element in accordance with the degree of match thus determined.

More specifically, the priority level is set in the priority level section of the image data element as shown in FIG. 12. The output-side protocol handler 131 is adapted to screen out the image data elements in accordance with the priority level set by the priority setting pipeline component 129. This means that the output-side protocol handler 131 is adapted to input the image data elements, and judge whether the priority level is greater than a predetermined threshold value with respect to each of image data elements, and discard the image data element if it is judged that the priority level is not greater than the threshold value. The priority setting pipeline component 129 constitutes the level setting section according to the present invention.

The description hereinlater will be directed to the screening operation performed by the output-side protocol handler with reference to FIG. 13.

In the step S301, the output-side protocol handler 131 is operated to input an image data element, and judge whether the priority level of the image data element is greater than a predetermined threshold value. If it is judged that the priority level of the image data element is not greater than a predetermined threshold value, the step S301 goes forward to the step S303 in which the output-side protocol handler 131 is operated to discard the image data element. Otherwise, the step S301 goes forward to the step S302, in which the output-side protocol handler 131 is operated to transmit the image data element.

The relay server 100 according to the present invention, comprising a priority setting pipeline component 129 for comparing each of the image data elements with a predetermined image pattern to determine a degree of match how well the image data element matches with the image pattern, and setting a priority level to the image data element in accordance with the degree of match, in which the output-side protocol handler 131 is operative to judge whether the priority level set by the priority setting pipeline component 129 is greater than a predetermined threshold value with respect to each of image data elements, delete the image data element if it is judged that the priority level is not greater than the threshold value and transmit the image data element whose priority level is judged to be greater than the threshold value, can improve the transmission efficiency, thereby making it possible to properly process the data signals even though the amount of the data signals may increase.

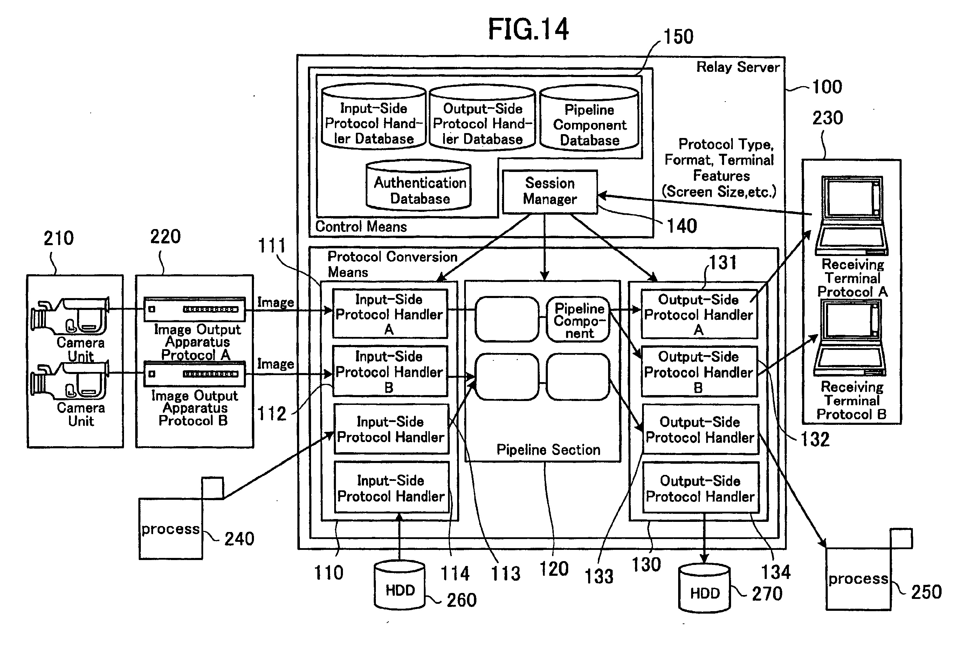

As shown in FIG. 14, the communications protocol applicable to the relay server 100 according to the present invention is not limited to network protocols used between the output entity 220 and the relay server 100, between the relay server 100 and the input entity 230. The communications protocol applicable to the relay server 100 may include inter-process protocols or inter-task protocol protocols such as, for example, Inter-Process Communications Protocol, viz., IPC protocol to be used between a process 240 and the relay server 100, and between the relay server 100 and a process 250, 29, and a protocol which enables the relay server 100 to have access to an external storage device, such as a hard disk 270. Preferably, the communications protocol applicable to the relay serve may further include, for example, Hypertext Transfer Protocol, viz. HTTP, H. 323 protocol, and Session Initiation Protocol, viz., SIP. The relay server 100 thus constructed can have access to, for example, an external storage device or an external process.

As shown in FIG. 1, the database section 150 may further include, for example, an authentication database 154. The authentication database 154 is adapted to store therein an authentication table indicative of relationship between user information and authorization statuses. According to the present invention, the session manager 140 of the relay server 100 may limit the authorization of any of the receiving terminals of the input entity 230 in accordance with the authorization status.

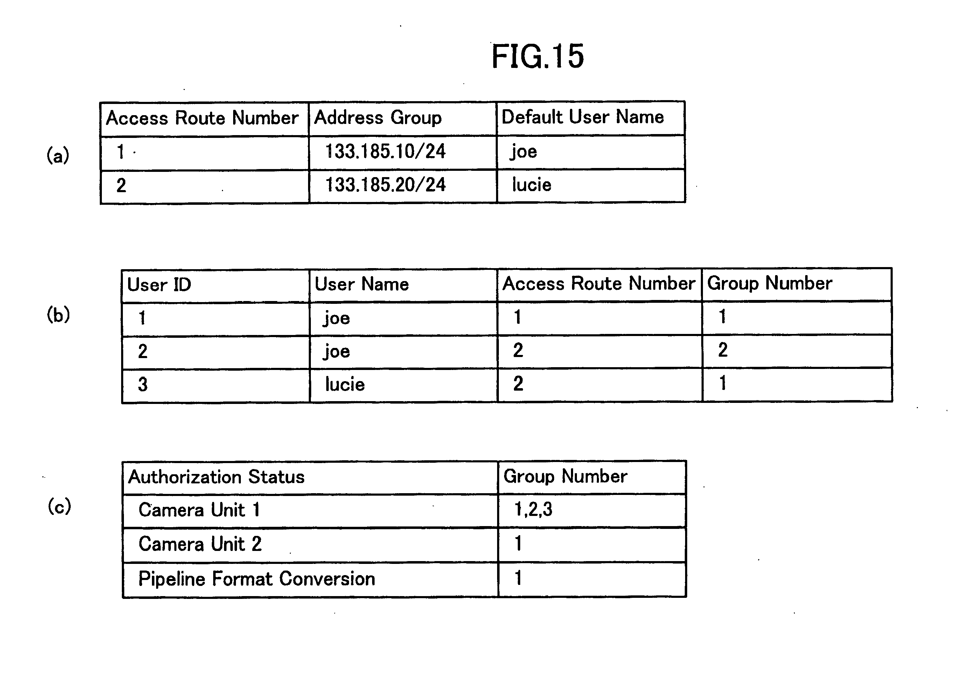

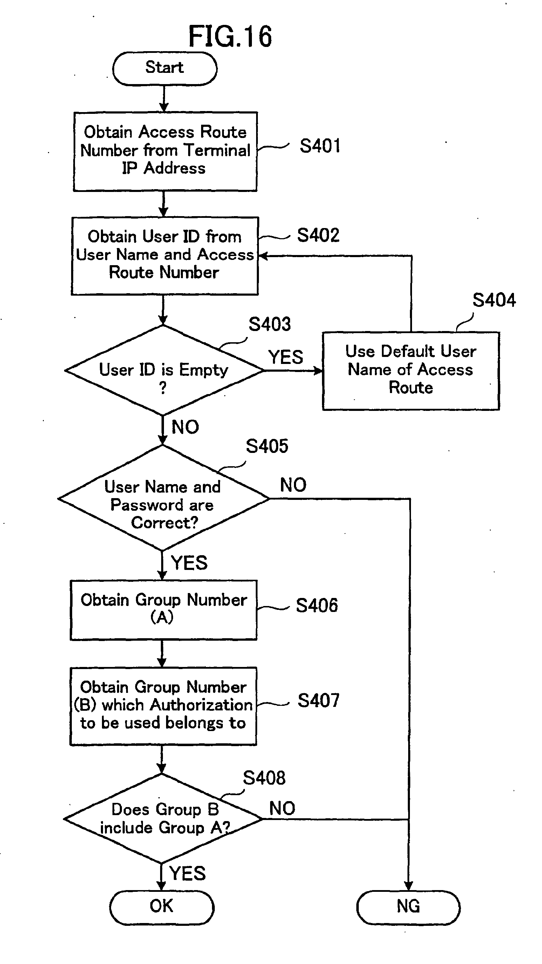

The authorization process performed by the session manager 140 in combination with the authentication database 154 will be described hereinlater with reference to the drawings shown in FIGS. 15, 16.

The input entity 230 comprises a plurality of receiving terminals, for example, the receiving terminals 231, 232. The database section 150 includes an authentication database 154. The authentication database 154 is adapted to store therein an authentication table indicative of relationship between user information and authorization statuses, for example, as shown in FIG. 15.

The session manager 140 is adapted to receive user information from a receiving terminal, for example, the receiving terminal 231 which attempts to have access to a resource of the moving picture delivering system through the relay server 100. The resource may include, for example but not limited to, the camera units 1, 2, and pipeline format conversion as shown in FIG. 15. The user information may include, for example, a user name and a password, an access route of a user. The access route of a user is intended to indicate the location of a user in a communication network. The session manager 140 is then adapted to determine the authorization status of the receiving terminal 231 with reference to the authentication table stored in the authentication storage section 154, and limit the authorization of the receiving terminal 231 in accordance with the authorization status thus determined. The authentication database 154 constitutes the authentication storage section according to the present invention. According to the present invention, the authorization status may include authorization to have access to any or more of the image output apparatuses accessible through the relay server 100 or authorization to operate any one or more resources accessible through the relay server 100, for example, any one or more of the pipeline components forming part of the pipeline section 120.

The operation of the authorization process performed by the session manager 140 in combination with the authentication database 154 will be described hereinlater with reference to the drawings shown in FIGS. 16.

In the step S401, the session manager 140 is operated to receive the user information of, for example, a user name, a password, and an IP address of the receiving terminal, for example, the receiving terminal 231, which attempts to have access to a resource of the moving picture delivering system through the relay server 100. The session manager 140 is operated to determine and obtain an access route number corresponding to the IP address, i.e., the address group thus received with reference to the authentication table shown in FIG. 15(a). The step S401 goes forward to the step S402, in which the session manager 140 is operated to determine and obtain a user ID corresponding to the access route number and the user name with reference to the authentication table shown in FIG. 15(b). The step S402 goes forward to the step S403, in which it is judged if the user ID is empty or not. If it is judged that the user ID is not empty, the step S403 goes forward to the step S405. Otherwise, the step S403 goes forward to the step S404 in which the session manager 140 is operated to determine and obtain a default user name corresponding to the access route number with reference to the authentication table shown in FIG. (a). The step S404 goes to the step S402, in which the session manager 140 is operated to determine a user ID corresponding to the default user name and the access route number with reference to the authentication table shown in FIG. 15(b).

In the step S405, it is judged that the user name and the password are correct or not. If it is judged that the user name and the password are correct, the step S405 goes forward to the step S406. Otherwise, the step S405 goes to the step NG, in which the process ends.

In the step S406, the session manager 140 is operated to determine and obtain a group number, for example, (A), corresponding to the user ID, the user name, and the access route number with reference to the authentication table shown in FIG. 15(b). The step S406 goes forward to the step S407, in which the session manager 140 is operated to determine and obtain a group number of a resource, for example, (B), which the user wants to use, i.e., a group number (b) which the authorization to be used by the user belongs to. The step S407 goes forward to the step S408 in which it is judged whether the group number (A) corresponding to user ID, the user name, and the access route number is included in the group number (B) corresponding to the resource, i.e., group number (b) which the authorization to be used by the user belongs to, with reference to the authentication table shown in FIG. 15(c). If it is judged that the group number (A) corresponding to user ID, the user name, and the access route number is included in the group number (B) corresponding to the resource, the step S408 goes to the step OK in which the receiving terminal, i.e., the receiving terminal 231 gains authorization to have access to and operate the resource. Otherwise the step S408 goes to the step NG, in which the receiving terminal 231 is rejected to have access to the resource.

As shown in FIG. 15(c), the group number determines the authorization status. This means that the group number indicates which resource of the moving picture delivering system is available to the user, or the receiving terminal. As shown in FIG. 15(c), the authorization status may include, for example, a camera unit 1, a camera unit 2, and a pipeline format conversion. The camera units 1, 2, and the pipeline format conversion are available to the user or the receiving terminal of group number 1 while only the camera unit 1 is available to the user or the receiving terminal of the group number 2 or 3. The session manager 140 is operated to limit the authorization of the receiving terminal 231 in accordance with the authorization status thus determined. The authentication database 154 constitutes the authentication storage section according to the present invention.

The relay server 100 according to the present invention, in which the user information includes an access route of a user, can identify the location of the user in a network, and provide a authorization to the user depending on the location of the user in the network. This means that the same user may receive different authorization depending on the location of the user in the network. The user may obtain an authorization to operate basic resources through the relay server when the user is located in a terminal, for example, remotely placed from the relay server, while, on the other hand, the same user may obtain an authorization to operate full resources when he or she is located in a terminal, for example, directly connected with the relay server 100 through a LAN network.

According to the present invention, the user information received by the relay server 100 may include information specifying a terminal which attempts to have access to the relay server 100 as an entity, such as, for example, a type of the receiving terminal, and a product number of the receiving terminal. Alternatively, the user information received by the relay server 100 may include user information specifying a terminal which attempts to have access to the relay server 100 as a location in a communication network, such as, for example, a telephone number and an IP address.

The relay server 100 according to the present invention comprising an authentication database 154 storing therein an authentication table indicative of relationship between user information and authorization statuses, in which the session manager 140 is operative to receive user information from a receiving terminal, for example receiving terminal 231, which attempts to have access to the relay server 100, to determine the authorization status of the receiving terminal 231 with reference to the authentication table stored in the authentication storage section 154, and limit the authorization of the receiving terminals 231 in accordance with the authorization status thus determined, can limit the authorization of any one of the receiving terminals in accordance with user information, thereby preventing an unauthorized person to have access to important information or resources through the relay server and enhancing the security.

Though it has been described in the foregoing description that the input data signal in the input-side protocol includes image data elements, the relay server 100 according to the present invention may receive and process the input data signal in the input-side protocol including voice data elements in a similar manner as described in the above.

As will be seen from the foregoing description, it is to be understood that the relay server 100 according to the present invention can receive and transmit the data signals between a plurality of image output apparatuses and a plurality of receiving terminals regardless of whether the image output apparatuses and the receiving terminals respectively share the same communications protocols and properties or not.

The following description will be directed to a relay server method with reference to the drawings shown in FIG. 1. The relay server method is performed through the steps (a) and (b) as follows.

In the step (a), an input data signal in an input-side protocol transmitted by an output entity 220 is received, the input data signal in the input-side communications protocol is converted into an output data signal in an output-side communications protocol applicable to an input entity 230, and the output data signal in the output-side communications protocol is transmitted to the input entity 230.

In the step (b), terminal protocol information indicative of the output-side communications protocol applicable to the input entity 230 is received from the input entity 230 and the step (a) is controlled in response to the terminal protocol information.

The relay server method according to the present invention can receive and transmit data signals between a plurality of image output apparatuses and a plurality of receiving terminals regardless of whether the image output apparatuses and the receiving terminals respectively share the same communications protocol or not.

The above embodiment of the relay server according to the present invention may be performed by executing a computer program recorded on a computer usable storage medium having computer readable code embodied therein for operating a relay server. The computer may be a microcomputer, the other computer, a device comprising a microcomputer, or the like.

While the invention has been shown and described with respect to particular embodiments thereof, this is for the purpose of illustration rather than limitation, and other variations and modifications of the specific embodiments herein shown and described will be apparent to those skilled in the art.

## Claims

1. A relay server (100) comprising:
protocol conversion means (110, 120, 130) for receiving an input data signal in an input-side communications protocol transmitted by an output entity (220), converting said input data signal in said input-side communications protocol into an output data signal in an output-side communications protocol applicable to an input entity (230), and transmitting said output data signal in said output-side communications protocol to said input entity (230); and
control means (140, 150) for receiving terminal protocol information indicative of said output-side communications protocol applicable to said input entity (230) from said input entity (230) and controlling said protocol conversion means (110, 120, 130) in response to said terminal protocol information, and in which
said input data signal in said input-side communications protocol includes a protocol element and data elements, said output data signal in said output-side communications protocol includes a protocol element and data elements, and said protocol conversion means (110, 120, 130) further comprises a protocol removing section (110) for removing said protocol element from said input data signal in said input-side communications protocol to extract said data elements, and a protocol synthesizing section (130) for synthesizing a protocol element and said data elements to generate said output data signal in said output-side communications protocol,
each of said data elements have a plurality of properties, said protocol conversion means (110, 120, 130) comprises:
a pipeline section (120) for inputting said data elements extracted by said protocol removing section (110), converting said properties of said data elements thus inputted, and outputting said data elements having properties thus converted to said protocol synthesizing section (130), said data elements are image data elements respectively having image formats,
**characterised in that**
said pipeline section (120) comprises: a plurality of pipeline components each for converting said image format of said image data element,
said control means (140, 150) comprises:
a pipeline storage component (153) for storing therein an image format table (144) indicative of relationship between a plurality of image formats and a plurality of pipeline components;
an image format identification section for receiving terminal format information indicative of an output-side image format applicable to said input entity (230) from said input entity (230), identifying an input-side image format applicable to said output entity (220) on the basis of said input data signal transmitted by said output entity (220), identifying said output-side image format applicable to said input entity (230) on the basis of said terminal format information, and judging whether said input-side image format is equal to said output-side image format, and
a pipeline selecting section for selecting an applicable pipeline component (121) applicable to convert said input-side image format to said output-side image format thus identified from among said pipeline components with reference to said image format table (144) stored in said pipeline storage component (153) when it is judged that said input-side image format is not equal to said output-side image format by said image format identification section, and in which
said applicable pipeline component (121) thus selected is operative to convert said input-side image format of said image data element to said output-side image format.

2. A relay server (100) as set forth in claim 1, in which said image data elements each having a monitor feature, said pipeline storage component (153) is operative to store therein a monitor feature table (144) indicative of relationship between a plurality of monitor features and a plurality of pipeline components, and said pipeline section (120) comprises: a plurality of pipeline components each for converting one of said monitor features of said image data elements,
said control means (140, 150) comprises:
a monitor feature identification section for receiving terminal format information indicative of an output-side monitor feature applicable to said input entity (230) from said input entity (230), identifying an input-side monitor feature applicable to said output entity (220) on the basis of said input data signal transmitted by said output entity (220), identifying said output-side monitor feature applicable to said input entity (230) on the basis of said terminal format information, and judging whether said input-side monitor feature is equal to said output-side monitor feature, and
a pipeline selecting section for selecting an applicable pipeline component applicable to convert said input-side monitor feature to said output-side monitor feature thus identified from among said pipeline components with reference to said monitor feature table (144) stored in said pipeline storage component (153) when it is judged that said input-side monitor feature is not equal to said output-side monitor feature by said monitor feature identification section, whereby
said pipeline component thus selected is operative to convert said input-side monitor feature of one of said image data elements to said output-side monitor feature.

3. A relay server (100) as set forth in claim 2, in which said monitor feature is an image resolution.

4. A relay server (100) as set forth in claim 2, in which said monitor feature is a colour number indicative of the maximum number of colours to be displayed in a monitor.

5. A relay server (100) as set forth in claim 1 further comprising: a plurality of shared memories including one shared memory (124) and subsequent one or more shared memories (125) each for temporally storing said data elements, in which
said input entity (230) comprises a plurality of receiving terminals including one receiving terminal (231) and subsequent one or more receiving terminals (232),
one of said pipeline components (121) is operative to convert a property of one of said data elements to be transmitted to said one of receiving terminal (231) and store said one of said data elements, of which said property has been converted, in one of said shared memories (124), while said one of said pipeline components (121) is operative to convert said property of subsequent one of said data elements to be transmitted to said subsequent one of receiving terminal (232), and store said subsequent one of said data elements, of which said property has been converted, in said subsequent shared memories (125).

6. A relay server (100) as set forth in claim 1 further comprising: a plurality of shared memories including one shared memory (124) and subsequent one or more shared memories (125) each for temporally storing said data elements, in which
said output entity (220) includes a plurality of output apparatuses including one output apparatus (221) and subsequent one or more output apparatuses (222),
said plurality of pipeline components includes one pipeline component (121) and subsequent one or more pipeline components (122),
one of said pipeline components (121) is operative to convert a property of one of said data elements received by said one output apparatus (221), and to store said one of said data elements, of which said property has been converted, in one of said shared memories (124), and
subsequent one of said pipeline components (122) is operative to convert a property of subsequent one of said data elements received by said subsequent output apparatus (222), and to store said one of said data elements, of which said property has been converted, in subsequent one of said shared memories (125).

7. A relay server (100) as set forth in claim 1, in which said protocol conversion means (110, 120, 130) comprises a level setting section (129) for setting a priority level to each of said data element, said protocol conversion means (110, 120, 130) is operative to convert said data signal in accordance with said priority level set by said level setting section (129).

8. A relay server (100) as set forth in claim 1 further comprising clock means (160) for measuring time, in which
said protocol conversion means (110, 120, 130) is operative to receive a plurality of input data signals, to attach a time stamp to said input data signals at a predetermined time interval measured by said clock means (160), and to convert said input data signals into output data signals, and to transmit said output data signals to said input entity (230) in synchronous with said time stamps.

9. A relay server (100) as set forth in claim 1, in which said protocol conversion means (110, 120, 130) comprises:
an input-side protocol handler section (110) including a plurality of input-side protocol handlers each for converting an input data signal in an input-side communications protocol into data elements;
said control means (140, 150) comprises:
a protocol storage section (151, 152) for storing therein a protocol table (142) indicative of relationship between a plurality of communications protocols and a plurality of protocol handlers;
a protocol identification section (141) for identifying said input-side communications protocol on the basis of said input data signal transmitted by said output entity (220);
a protocol selecting section (143) for selecting an applicable input-side protocol handler (111) applicable to said input-side communications protocol thus identified from among said input-side protocol handlers (111, 112, 113, 114) with reference to said protocol table (142) stored in said protocol storage section (151, 152), and in which
said control means (140, 150) is operative to have said applicable input-side protocol handler (111) thus selected convert said input data signal in said input-side communications protocol thus received into data elements.

10. A relay server (100) as set forth in claim 9, in which said input data signal in said input-side communications protocol includes a protocol element and data elements, and
said applicable input-side protocol handler (111) is operative to input said input data signal in said input-side communications protocol thus received, and remove said protocol element from said input data signal in said input-side communications protocol to extract said data elements.

11. A relay server (100) as set forth in claim 9 in which said protocol conversion means (110, 120, 130) comprises:
an output-side protocol handler section (130) including a plurality of output-side protocol handlers each for converting data elements into an output data signal in an output-side communications protocol;
said protocol identification section (141) is operative to identify said output-side communications protocol on the basis of said terminal protocol information received from said input entity (230), said protocol selecting section (143) is operative to select an applicable output-side protocol handler (131) applicable to said output-side communications protocol thus identified from among said output-side protocol handlers (131, 132, 133, 134) with reference to said protocol table (142) stored in said protocol storage section (151, 152), and in which
said control means (140, 150) is operative to have said applicable output-side protocol handler (131) convert said data elements into an output data signal in an output-side communications protocol, and transmit said output data signal in said output-side communications protocol thus converted.

12. A relay server (100) as set forth in claim 11, in which said output data signal in said output-side communications protocol includes a protocol element and data elements, and
said applicable output-side protocol handler (131) is operative to input said data elements, and synthesize a protocol element and said data elements to generate said output data signal in said output-side communications protocol.

13. A relay server (100) as set forth in claim 11, in which said protocol conversion means (110, 120, 130) comprises a pipeline section (120) for inputting said data elements from said input-side protocol handler section (110), said data elements are image data elements respectively having image formats,
said pipeline section (120) comprises: a plurality of pipeline components each for converting said image format of said image data element,
said control means (140, 150) comprises:
a pipeline storage component (153) for storing therein an image format table (144) indicative of relationship between a plurality of image formats and a plurality of pipeline components;
an image format identification section for receiving terminal format information indicative of an output-side image format applicable to said input entity (230) from said input entity (230), identifying an input-side image format applicable to said output entity (220) on the basis of said input data signal transmitted by said output entity (220), to identifying said output-side image format applicable to said input entity (230) on the basis of said terminal format information, and judging whether said input-side image format is equal to said output-side image format,
a pipeline selecting section for selecting an applicable pipeline component (121) applicable to said input-side image format and said output-side image format thus identified from among said pipeline components with reference to said image format table (144) stored in said pipeline storage component (153) when it is judged that said input-side image format is not equal to said output-side image format, and in which
said applicable pipeline component (121) thus selected is operative to convert said input-side image format of said image data element to said output-side image format.

14. A relay server (100) as set forth in claim 13, in which said image data elements each having a plurality of monitor features, said pipeline section (120) comprises: a plurality of pipeline components each for converting one of said monitor features of said image data elements, said pipeline storage component (153) is operative to store therein a monitor feature table (144) indicative of relationship between a plurality of monitor features and a plurality of pipeline components,
said control means (140, 150) comprises:
a monitor feature identification section for receiving terminal format information indicative of an output-side monitor feature applicable to said input entity (230) from said input entity (230), identifying an input-side monitor feature applicable to said output entity (220) on the basis of said input data signal transmitted by said output entity (220), identifying said output-side monitor feature applicable to said input entity (230) on the basis of said terminal format information, and judging whether said input-side monitor feature is equal to said output-side monitor feature,
a pipeline selecting section for selecting an applicable pipeline component applicable to convert said input-side monitor feature to said output-side monitor feature thus identified from among said pipeline components with reference to said monitor feature table (144) stored in said pipeline storage component (153) when it is judged that said input-side monitor feature is not equal to said output-side monitor feature, and in which
said pipeline component thus selected is operative to convert said input-side monitor feature of one of said image data elements to said output-side monitor feature.

15. A relay server (100) as set forth in claim 14, in which said monitor features include an image resolution.

16. A relay server (100) as set forth in claim 14, in which said monitor features include a colour number indicative of the maximum number of colours to be displayed in a monitor.

17. A relay server (100) as set forth in claim 14, comprising: a plurality of shared memories including one shared memory (124) and subsequent one or more shared memories (125) each for temporally storing said data elements, in which
said input entity (230) comprises a plurality of receiving terminals including one receiving terminal (231) and subsequent one or more receiving terminals (232),
one of said pipeline components (121) is operative to convert a monitor feature of one of said data elements to be transmitted to said one of receiving terminal (231), and store said one of said data elements, of which said monitor feature has been converted, in one of said shared memories (124), while said one of said pipeline components (121) is operative to convert a monitor feature of subsequent one of said data elements to be transmitted to said subsequent one of receiving terminal (232), and store said subsequent one of said data elements, of which monitor feature has been converted, in said subsequent shared memories (125).

18. A relay server (100) as set forth in claim 14, comprising: a plurality of shared memories including one shared memory (124) and one or more shared memories (125) each for temporally storing said data elements, in which
said output entity (220) includes a plurality of output apparatuses including one output apparatus (221) and subsequent one or more output apparatuses (222),
said plurality of pipeline components includes one pipeline component (121) and subsequent one or more pipeline components (122),
one of said pipeline components (121) is operative to convert a monitor feature of one of said data elements received by said one output apparatus (221), and to store said one of said data elements, of which said monitor feature has been converted, in one of said shared memories (124), and
subsequent one of said pipeline components (122) is operative to convert a monitor feature of subsequent one of said data elements received by said subsequent output apparatus (222), and to store said one of said data elements, of which said monitor feature has been converted, in subsequent one of said shared memories (125).

19. A relay server (100) as set forth in claim 14, in which said pipeline section (120) comprises a priority setting pipeline component (129) for comparing each of said image data elements with a predetermined image pattern to determine a degree of match how well said image data element matches with said image pattern, and setting a priority level to said image data element in accordance with said degree of match, and
said output-side protocol handler (131) is operative to judge whether said priority level set by said priority setting pipeline component (129) is greater than a predetermined threshold value with respect to each of image data elements, and discard said image data element if it is judged that said priority level is not greater than said threshold value.

20. A relay server (100) as set forth in claim 14, in which
said input entity (230) comprises a plurality of receiving terminals,
said control means (140, 150) comprises an authentication storage section (154) for storing therein an authentication table indicative of relationship between user information and authorization statuses,
said control means (140, 150) is operative to receive user information from said receiving terminal (231) which attempts to have access to said relay server (100), to determine said authorization status of said receiving terminal (231) with reference to said authentication table stored in said authentication storage section (154), and limit the authorization of said receiving terminals (231) in accordance with said authorization status thus determined.

21. A relay server (100) as set forth in claim 1, in which said communications protocol is a network protocol.

22. A relay server (100) as set forth in claim 1, in which said communications protocol includes Hypertext Transfer Protocol, viz. HTTP.

23. A relay server (100) as set forth in claim 1, in which said communications protocol includes H. 323 protocol.

24. A relay server (100) as set forth in claim 1, in which said communications protocol includes Session Initiation Protocol, viz., SIP.

25. A relay server (100) as set forth in claim 1, in which said communications protocol includes inter-process communications protocol.

26. A relay server (100) as set forth in claim 1, in which said communications protocol includes a protocol which enables said relay server (100) to have access to an external storage device.

27. A relay server (100) as set forth in claim 20, in which said user information includes a user name and a password.

28. A relay server (100) as set forth in claim 20, in which said user information includes an access route of a user.

29. A relay server (100) as set forth in claim 20, in which said user information includes information specifying a receiving terminal which attempts to have access to said relay server (100) as an entity.

30. A relay server (100) as set forth in claim 20, in which said user information includes information specifying a receiving terminal which attempts to have access to said relay server (100) as a location in a communication network.

31. A relay server (100) as set forth in claim 20, in which
said output entity (220) includes a plurality of output apparatuses, and
said authorization status includes authorization to have access to any one or more of said output apparatuses (221, 222).

32. A relay server (100) as set forth in claim 20, in which
said output entity (220) includes a plurality of output apparatuses, and
said authorization status includes authorization to operate any one or more of said pipeline components forming part of said pipeline section (120).

33. A relay server (100) as set forth in claim 1, in which said input data signal in said input-side communications protocol includes image data elements.

34. A relay server (100) as set forth in claim 1, in which said input data signal in said input-side communications protocol includes voice data elements.

35. A relay server method comprising the steps of:
(a) receiving an input data signal in an input-side communications protocol transmitted by an output entity (220), converting said input data signal in said input-side communications protocol into an output data signal in an output-side communications protocol applicable to an input entity (230), and transmitting said output data signal in said output-side communications protocol to said input entity (230); and
(b) receiving terminal protocol information indicative of said output-side communications protocol applicable to said input entity (230) from said input entity (230) and controlling said step (a) in response to said terminal protocol information, and in which
said input data signal in said input-side communications protocol includes a protocol element and data elements, said output data signal in said output-side communications protocol includes a protocol element and data elements, and said step (a) further comprises a step of (a1) removing said protocol element from said input data signal in said input-side communications protocol to extract said data elements, and a step of (a2) synthesizing a protocol element and said data elements to generate said output data signal in said output-side communications protocol,
each of said data elements have a plurality of properties,
said step (a) further comprises the steps of (a3) inputting said data elements extracted in said step (a1), converting said properties of said data elements thus inputted, and outputting said data elements having properties thus converted to said step (a2), said data elements are image data elements respectively having image formats,
**characterised in that**
said step (a3) comprises: a plurality of pipeline steps each for converting said image format of said image data element,
said step (b) further comprises the steps of:
(b1) storing an image format table (144) indicative of relationship between a plurality of image formats and a plurality of pipeline steps;
(b2) receiving terminal format information indicative of an output-side image format applicable to said input entity (230) from said input entity (230), identifying an input-side image format applicable to said output entity (220) on the basis of said input data signal transmitted by said output entity (220), identifying said output-side image format applicable to said input entity (230) on the basis of said terminal format information, and judging whether said input-side image format is equal to said output-side image format, and
(b3) selecting an applicable pipeline step applicable to convert said input-side image format to said output-side image format thus identified from among said pipeline steps with reference to said image format table (144) stored in said step (b1) when it is judged in said step (b2) that said input-side image format is not equal to said output-side image format by said image format identification section, and in which
said applicable pipeline step thus selected has a step of converting said input-side image format of said image data element to said output-side image format.

36. A relay server computer program product comprising a computer usable storage medium having computer readable code embodied therein, wherein the computer readable code comprises:
a first program product code for receiving an input data signal in an input-side communications protocol transmitted by an output entity (220), converting said input data signal in said input-side communications protocol into an output data signal in an output-side communications protocol applicable to an input entity (230), and transmitting said output data signal in said output-side communications protocol to said input entity (230); and
a second program product code for receiving terminal protocol information indicative of said output-side communications protocol applicable to said input entity (230) from said input entity (230) and controlling said first program product code in response to said terminal protocol information, and in which
said input data signal in said input-side communications protocol includes a protocol element and data elements, said output data signal in said output-side communications protocol includes a protocol element and data elements, and said first program product code further comprises a code of (a1) removing said protocol element from said input data signal in said input-side communications protocol to extract said data elements, and a code of (a2) synthesizing a protocol element and said data elements to generate said output data signal in said output-side communications protocol,
each of said data elements have a plurality of properties,
said first program product code further comprises the code of (a3) inputting said data elements extracted by said code (a1), converting said properties of said data elements thus inputted, and outputting said data elements having properties thus converted to said code (a2), said data elements are image data elements respectively having image formats,
**characterised in that**
said code (a3) comprises: a plurality of pipeline steps each for converting said image format of said image data element,
said second program product code further comprises the codes of:
(b1) storing an image format table (144) indicative of relationship between a plurality of image formats and a plurality of pipeline steps;
(b2) receiving terminal format information indicative of an output-side image format applicable to said input entity (230) from said input entity (230), identifying an input-side image format applicable to said output entity (220) on the basis of said input data signal transmitted by said output entity (220), identifying said output-side image format applicable to said input entity (230) on the basis of said terminal format information, and judging whether said input-side image format is equal to said output-side image format, and
(b3) selecting an applicable pipeline step applicable to convert said input-side image format to said output-side image format thus identified from among said pipeline steps with reference to said image format table (144) stored by said code (b1) when it is judged by said code (b2) that said input-side image format is not equal to said output-side image format by said image format identification section, and in which
said applicable pipeline step thus selected has a code of converting said input-side image format of said image data element to said output-side image format.

## Patentansprüche

1. Relais-Server (100) mit:
Protokollumwandlungsmitteln (110, 120, 130) zum Empfangen eines Eingangs-Datensignals in einem eingangsseitigen Kommunikationsprotokoll, das von einer Ausgabe-Einheit (220) gesendet wird, zum Umwandeln des Eingangs-Datensignals in dem eingangsseitigen Kommunikationsprotokoll in ein Ausgangs-Datensignal in einem ausgangsseitigen Kommunikationsprotokoll, das für eine Eingabe-Einheit (230) verwendet werden kann, und zum Senden des Ausgangs-Datensignals in dem ausgangsseitigen Kommunikationsprotokoll an die Eingabe-Einheit (230) und
Steuermitteln (140, 150) zum Empfangen von Endgerät-Protokollinformationen, die das für die Eingabe-Einheit (230) verwendbare ausgangsseitige Kommunikationsprotokoll angeben, von der Eingabe-Einheit (230) und zum Steuern der Protokollumwandlungsmittel (110, 120, 130) in Reaktion auf die Endgerät-Protokollinformationen,
wobei das Eingangs-Datensignal in dem eingangsseitigen Kommunikationsprotokoll ein Protokoll-Element und Datenelemente enthält, das Ausgangs-Datensignal in dem ausgangsseitigen Kommunikationsprotokoll ein Protokoll-Element und Datenelemente enthält und die Protokollumwandlungsmittel (110, 120, 130) weiterhin Folgendes aufweisen:
einen Protokoll-Entfernungsteil (110) zum Entfernen des Protokoll-Elements aus dem Eingangs-Datensignal in dem eingangsseitigen Kommunikationsprotokoll, um die Datenelemente zu extrahieren; und
einen Protokoll-Synthetisierungsteil (130) zum Synthetisieren eines Protokoll-Elements und der Datenelemente, um das Ausgangs-Datensignal in dem ausgangsseitigen Kommunikationsprotokoll zu erzeugen,
wobei jedes der Datenelemente mehrere Eigenschaften hat und die Protokollumwandlungsmittel (110, 120, 130) weiterhin Folgendes aufweisen:
einen Pipeline-Teil (120) zum Eingeben der von dem Protokoll-Entfernungsteil (110) extrahierten Datenelemente, zum Umwandeln der Eigenschaften der auf diese Weise eingegebenen Datenelemente und zum Ausgeben der Datenelemente mit den auf diese Weise umgewandelten Eigenschaften an den Protokoll-Synthetisierungsteil (130), wobei die Datenelemente Bilddatenelemente sind, die jeweils Bildformate haben,
**dadurch gekennzeichnet, dass**
der Pipeline-Teil (120) mehrere Pipeline-Komponenten jeweils zum Umwandeln des Bildformats des Bilddatenelements aufweist,
die Steuermittel (140, 150) Folgendes aufweisen:
eine Pipeline-Speicherkomponente (153) zum Speichern einer Bildformat-Tabelle (144), die die Beziehung zwischen mehreren Bildformaten und mehreren Pipeline-Komponenten angibt;
einen Bildformat-Identifikationsteil zum Empfangen von Endgerät-Formatinformationen, die ein ausgangsseitiges Bildformat angeben, das für die Eingabe-Einheit (230) verwendet werden kann, von der Eingabe-Einheit (230), zum Identifizieren eines eingangsseitigen Bildformats, das für die Ausgabe-Einheit (220) verwendet werden kann, aufgrund des von der Ausgabe-Einheit (220) gesendeten Eingangs-Datensignals, zum Identifizieren des ausgangsseitigen Bildformats, das für die Eingabe-Einheit (230) verwendet werden kann, aufgrund der Endgerät-Formatinformationen und zum Entscheiden, ob das eingangsseitige Bildformat gleich dem ausgangsseitigen Bildformat ist; und
einen Pipeline-Auswählteil zum Auswählen einer verwendbaren Pipeline-Komponente (121), die zum Umwandeln des eingangsseitigen Bildformats in das auf diese Weise identifizierte ausgangsseitige Bildformat verwendet werden kann, aus den Pipeline-Komponenten durch Referenzieren der in der Pipeline-Speicherkomponente (153) gespeicherten Bildformat-Tabelle (144), wenn von dem Bildformat-Identifikationsteil entschieden wird, dass das eingangsseitige Bildformat nicht gleich dem ausgangsseitigen Bildformat ist, und dass
die auf diese Weise ausgewählte verwendbare Pipeline-Komponente (121) so betreibbar ist, dass sie das eingangsseitige Bildformat des Bilddatenelements in das ausgangsseitige Bildformat umwandelt.

2. Relais-Server (100) nach Anspruch 1, **dadurch gekennzeichnet, dass**
die Bilddatenelemente jeweils ein Monitormerkmal haben,
die Pipeline-Speicherkomponente (153) so betreibbar ist, dass sie eine Monitormerkmal-Tabelle (144) speichert, die die Beziehung zwischen mehreren Monitormerkmalen und mehreren Pipeline-Komponenten angibt,
der Pipeline-Teil (120) mehrere Pipeline-Komponenten jeweils zum Umwandeln eines der Monitormerkmale der Bilddatenelemente aufweist und
die Steuermittel (140, 150) Folgendes aufweisen:
einen Monitormerkmal-Identifikationsteil zum Empfangen von Endgerät-Formatinformationen, die ein ausgangsseitiges Monitormerkmal angeben, das für die Eingabe-Einheit (230) verwendet werden kann, von der Eingabe-Einheit (230), zum Identifizieren eines eingangsseitigen Monitormerkmals, das für die Ausgabe-Einheit (220) verwendet werden kann, aufgrund des von der Ausgabe-Einheit (220) gesendeten Eingangs-Datensignals, zum Identifizieren des ausgangsseitigen Monitormerkmals, das für die Eingabe-Einheit (230) verwendet werden kann, aufgrund der Endgerät-Formatinformationen und zum Entscheiden, ob das eingangsseitige Monitormerkmal gleich dem ausgangsseitigen Monitormerkmal ist; und
einen Pipeline-Auswählteil zum Auswählen einer verwendbaren Pipeline-Komponente, die zum Umwandeln des eingangsseitigen Monitormerkmals in das auf diese Weise identifizierte ausgangsseitige Monitormerkmal verwendet werden kann, aus den Pipeline-Komponenten durch Referenzieren der in der Pipeline-Speicherkomponente (153) gespeicherten Monitormerkmal-Tabelle (144), wenn von dem Monitormerkmal-Identifikationsteil entschieden wird, dass das eingangsseitige Monitormerkmal nicht gleich dem ausgangsseitigen Monitormerkmal ist, wodurch die auf diese Weise ausgewählte verwendbare Pipeline-Komponente so betreibbar ist, dass sie das eingangsseitige Monitormerkmal eines der Bilddatenelemente in das ausgangsseitige Monitormerkmal umwandelt.

3. Relais-Server (100) nach Anspruch 2, **dadurch gekennzeichnet, dass** das Monitormerkmal eine Bildauflösung ist.

4. Relais-Server (100) nach Anspruch 2, **dadurch gekennzeichnet, dass** das Monitormerkmal eine Farbenanzahl ist, die die Höchstanzahl von Farben angibt, die auf einem Monitor angezeigt werden sollen.

5. Relais-Server (100) nach Anspruch 1, der weiterhin mehrere Shared Memories aufweist, die einen Shared Memory (124) und einen oder mehrere nachfolgende Shared Memories (125) jeweils zum Zwischenspeichern der Datenelemente umfassen, **dadurch gekennzeichnet, dass**
die Eingabe-Einheit (230) mehrere Empfangsgeräte aufweist, die ein Empfangsgerät (231) und ein oder mehrere nachfolgende Empfangsgeräte (232) umfassen, und
eine der Pipeline-Komponenten (121) so betreibbar ist, dass sie eine Eigenschaft eines der Datenelemente, die an das eine Empfangsgerät (231) gesendet werden sollen, umwandelt und das eine der Datenelemente, dessen Eigenschaft umgewandelt worden ist, in einem der Shared Memories (124) speichert, während die eine der Pipeline-Komponenten (121) so betreibbar ist, dass sie die Eigenschaft eines der nachfolgenden Datenelemente, die an eines der nachfolgenden Empfangsgeräte (232) gesendet werden sollen, umwandelt und das eine der nachfolgenden Datenelemente, dessen Eigenschaft umgewandelt worden ist, in den nachfolgenden Shared Memories (125) speichert.

6. Relais-Server (100) nach Anspruch 1, der weiterhin mehrere Shared Memories aufweist, die einen Shared Memory (124) und einen oder mehrere nachfolgende Shared Memories (125) jeweils zum Zwischenspeichern der Datenelemente umfassen, **dadurch gekennzeichnet, dass**
die Ausgabe-Einheit (220) mehrere Ausgabevorrichtungen aufweist, die eine Ausgabevorrichtung (221) und eine oder mehrere nachfolgende Ausgabevorrichtungen (222) umfassen,
die mehreren Pipeline-Komponenten eine Pipeline-Komponente (121) und eine oder mehrere nachfolgende Pipeline-Komponenten (122) umfassen,
eine der Pipeline-Komponenten (121) so betreibbar ist, dass sie eine Eigenschaft eines der Datenelemente, die von der einen Ausgabevorrichtung (221) empfangen werden, umwandelt und das eine der Datenelemente, dessen Eigenschaft umgewandelt worden ist, in einem der Shared Memories (124) speichert, und
eine der nachfolgenden Pipeline-Komponenten (122) so betreibbar ist, dass sie eine Eigenschaft eines der nachfolgenden Datenelemente, das von der nachfolgenden Ausgabevorrichtung (222) empfangen wird, umwandelt und das eine der Datenelemente, dessen Eigenschaft umgewandelt worden ist, in einem der nachfolgenden Shared Memories (125) speichert.

7. Relais-Server (100) nach Anspruch 1, **dadurch gekennzeichnet, dass** die Protokollumwandlungsmittel (110, 120, 130) einen Ebenen-Festlegungsteil (129) zum Festlegen einer Prioritätsebene für jedes der Datenelemente aufweisen, wobei die Protokollumwandlungsmittel (110, 120, 130) so betreibbar sind, dass sie das Datensignal entsprechend der von dem Ebenen-Festlegungsteil (129) festgelegten Prioritätsebene umwandeln.

8. Relais-Server (100) nach Anspruch 1, der weiterhin Uhrmittel (160) zum Messen von Zeit aufweist, **dadurch gekennzeichnet, dass** die Protokollumwandlungsmittel (110, 120, 130) so betreibbar sind, dass sie mehrere Eingangs-Datensignale empfangen, in einem vorgegebenen Zeitintervall, das von den Uhrmitteln (160) gemessen wird, einen Zeitstempel an die Eingangs-Datensignale anhängen, die Eingangs-Datensignale in Ausgangs-Datensignale umwandeln und die Ausgangs-Datensignale an die Eingabe-Einheit (230) synchron mit den Zeitstempeln senden.

9. Relais-Server (100) nach Anspruch 1, **dadurch gekennzeichnet, dass**
die Protokollumwandlungsmittel (110, 120, 130) einen eingangsseitigen Protokollhandlerteil (110) mit mehreren eingangsseitigen Protokollhandlern jeweils zum Umwandeln eines Eingangs-Datensignals in einem eingangsseitigen Kommunikationsprotokoll in Datenelemente aufweisen,
die Steuermittel (140, 150) Folgendes aufweisen:
einen Protokollspeicherteil (151, 152) zum Speichern einer Protokolltabelle (142), die die Beziehung zwischen mehreren Kommunikationsprotokollen und mehreren Protokollhandlern angibt;
einen Protokollidentifizierungsteil (141) zum Identifizieren des eingangsseitigen Kommunikationsprotokolls aufgrund des von der Ausgabe-Einheit (220) gesendeten Eingangs-Datensignals und
einen Protokollauswählteil (143) zum Auswählen eines verwendbaren eingangsseitigen Protokollhandlers (111), der für das auf diese Weise identifizierte eingangsseitige Kommunikationsprotokoll verwendet werden kann, aus den eingangsseitigen Protokollhandlern (111, 112, 113, 114) durch Referenzieren der in dem Protokollspeicherteil (151, 152) gespeicherten Protokolltabelle (142), und dass
die Steuermittel (140, 150) so betreibbar sind, dass sie den auf diese Weise ausgewählten verwendbaren eingangsseitigen Protokollhandler (111) das Eingangs-Datensignal in dem auf diese Weise empfangenen eingangsseitigen Kommunikationsprotokoll in Datenelemente umwandeln lassen.

10. Relais-Server (100) nach Anspruch 9, **dadurch gekennzeichnet, dass**
das Eingangs-Datensignal in dem eingangsseitigen Kommunikationsprotokoll ein Protokoll-Element und Datenelemente enthält und
der verwendbare eingangsseitige Protokollhandler (111) so betreibbar ist, dass er das Eingangs-Datensignal in dem auf diese Weise empfangenen eingangsseitigen Kommunikationsprotokoll eingibt und das Protokoll-Element aus dem Eingangs-Datensignal in dem eingangsseitigen Kommunikationsprotokoll entfernt, um die Datenelemente zu extrahieren.

11. Relais-Server (100) nach Anspruch 9, **dadurch gekennzeichnet, dass**
die Protokollumwandlungsmittel (110, 120, 130) einen ausgangsseitigen Protokollhandlerteil (130) mit mehreren ausgangsseitigen Protokollhandlern jeweils zum Umwandeln von Datenelementen in ein Ausgangs-Datensignal in einem ausgangsseitigen Kommunikationsprotokoll aufweisen,
der Protokollidentifizierungsteil (141) so betreibbar ist, dass er das ausgangsseitige Kommunikationsprotokoll aufgrund der von der Eingabe-Einheit (230) empfangenen Endgerät-Protokollinformationen identifiziert, der Protokollauswählteil (143) so betreibbar ist, dass er einen verwendbaren ausgangsseitigen Protokollhandler (131), der für das auf diese Weise identifizierte ausgangsseitige Kommunikationsprotokoll verwendet werden kann, aus den ausgangsseitigen Protokollhandlern (131, 132, 133, 134) durch Referenzieren der in dem Protokollspeicherteil (151, 152) gespeicherten Protokolltabelle (142) auswählt und
die Steuermittel (140, 150) so betreibbar sind, dass sie den verwendbaren ausgangsseitigen Protokollhandler (131) die Datenelemente in ein Ausgangs-Datensignal in einem ausgangsseitigen Kommunikationsprotokoll umwandeln lassen und ihn das Ausgangs-Datensignal in dem auf diese Weise umgewandelten ausgangsseitigen Kommunikationsprotokoll senden lassen.

12. Relais-Server (100) nach Anspruch 11, **dadurch gekennzeichnet, dass**
das Ausgangs-Datensignal in dem ausgangsseitigen Kommunikationsprotokoll ein Protokoll-Element und Datenelemente enthält und
der verwendbare ausgangsseitige Protokollhandler (131) so betreibbar ist, dass er die Datenelemente eingibt und ein Protokoll-Element und die Datenelemente synthetisiert, um das Ausgangs-Datensignal in dem ausgangsseitigen Kommunikationsprotokoll zu erzeugen.

13. Relais-Server (100) nach Anspruch 11, **dadurch gekennzeichnet, dass**
die Protokollumwandlungsmittel (110, 120, 130) einen Pipeline-Teil (120) zum Eingeben der Datenelemente von dem eingangsseitigen Protokollhandlerteil (110) aufweisen, wobei die Datenelemente Bilddatenelemente sind, die jeweils Bildformate haben,
der Pipeline-Teil (120) mehrere Pipeline-Komponenten jeweils zum Umwandeln des Bildformats des Bilddatenelements aufweist,
die Steuermittel (140, 150) Folgendes aufweisen:
eine Pipeline-Speicherkomponente (153) zum Speichern einer Bildformat-Tabelle (144), die die Beziehung zwischen mehreren Bildformaten und mehreren Pipeline-Komponenten angibt;
einen Bildformat-Identifikationsteil zum Empfangen von Endgerät-Formatinformationen, die ein ausgangsseitiges Bildformat angeben, das für die Eingabe-Einheit (230) verwendet werden kann, von der Eingabe-Einheit (230), zum Identifizieren eines eingangsseitigen Bildformats, das für die Ausgabe-Einheit (220) verwendet werden kann, aufgrund des von der Ausgabe-Einheit (220) gesendeten Eingangs-Datensignals, zum Identifizieren des ausgangsseitigen Bildformats, das für die Eingabe-Einheit (230) verwendet werden kann, aufgrund der Endgerät-Formatinformationen und zum Entscheiden, ob das eingangsseitige Bildformat gleich dem ausgangsseitigen Bildformat ist; und
einen Pipeline-Auswählteil zum Auswählen einer verwendbaren Pipeline-Komponente (121), die für das eingangsseitige Bildformat und das auf diese Weise identifizierte ausgangsseitige Bildformat verwendet werden kann, aus den Pipeline-Komponenten durch Referenzieren der in der Pipeline-Speicherkomponente (153) gespeicherten Bildformat-Tabelle (144), wenn entschieden wird, dass das eingangsseitige Bildformat nicht gleich dem ausgangsseitigen Bildformat ist, und dass die auf diese Weise ausgewählte verwendbare Pipeline-Komponente (121) so betreibbar
ist, dass sie das eingangsseitige Bildformat des Bilddatenelements in das ausgangsseitige Bildformat umwandelt.

14. Relais-Server (100) nach Anspruch 13, **dadurch gekennzeichnet, dass**
die Bilddatenelemente jeweils mehrere Monitormerkmale haben,
der Pipeline-Teil (120) mehrere Pipeline-Komponenten jeweils zum Umwandeln eines der Monitormerkmale der Bilddatenelemente aufweist,
die Pipeline-Speicherkomponente (153) so betreibbar ist, dass sie eine Monitormerkmal-Tabelle (144) speichert, die die Beziehung zwischen mehreren Monitormerkmalen und mehreren Pipeline-Komponenten angibt,
die Steuermittel (140, 150) Folgendes aufweisen:
einen Monitormerkmal-Identifikationsteil zum Empfangen von Endgerät-Formatinformationen, die ein ausgangsseitiges Monitormerkmal angeben, das für die Eingabe-Einheit (230) verwendet werden kann, von der Eingabe-Einheit (230), zum Identifizieren eines eingangsseitigen Monitormerkmals, das für die Ausgabe-Einheit (220) verwendet werden kann, aufgrund des von der Ausgabe-Einheit (220) gesendeten Eingangs-Datensignals, zum Identifizieren des ausgangsseitigen Monitormerkmals, das für die Eingabe-Einheit (230) verwendet werden kann, aufgrund der Endgerät-Formatinformationen und zum Entscheiden, ob das eingangsseitige Monitormerkmal gleich dem ausgangsseitigen Monitormerkmal ist; und
einen Pipeline-Auswählteil zum Auswählen einer verwendbaren Pipeline-Komponente, die zum Umwandeln des eingangsseitigen Monitormerkmals in das auf diese Weise identifizierte ausgangsseitige Monitormerkmal verwendet werden kann, aus den Pipeline-Komponenten durch Referenzieren der in der Pipeline-Speicherkomponente (153) gespeicherten Monitormerkmal-Tabelle (144), wenn entschieden wird, dass das eingangsseitige Monitormerkmal nicht gleich dem ausgangsseitigen Monitormerkmal ist, und dass
die auf diese Weise ausgewählte Pipeline-Komponente so betreibbar ist, dass sie das eingangsseitige Monitormerkmal eines der Bilddatenelemente in das ausgangsseitige Monitormerkmal umwandelt.

15. Relais-Server (100) nach Anspruch 14, **dadurch gekennzeichnet, dass** die Monitormerkmale eine Bildauflösung beinhalten.

16. Relais-Server (100) nach Anspruch 14, **dadurch gekennzeichnet, dass** die Monitormerkmale eine Farbenanzahl beinhalten, die die Höchstanzahl von Farben angibt, die auf einem Monitor angezeigt werden sollen.

17. Relais-Server (100) nach Anspruch 14, der mehrere Shared Memories aufweist, die einen Shared Memory (124) und einen oder mehrere nachfolgende Shared Memories (125) jeweils zum Zwischenspeichern der Datenelemente umfassen, **dadurch gekennzeichnet, dass**
die Eingabe-Einheit (230) mehrere Empfangsgeräte aufweist, die ein Empfangsgerät (231) und ein oder mehrere nachfolgende Empfangsgeräte (232) umfassen, und
eine der Pipeline-Komponenten (121) so betreibbar ist, dass sie ein Monitormerkmal eines der Datenelemente, die an das eine Empfangsgerät (231) gesendet werden sollen, umwandelt und das eine der Datenelemente, dessen Monitormerkmal umgewandelt worden ist, in einem der Shared Memories (124) speichert, während die eine der Pipeline-Komponenten (121) so betreibbar ist, dass sie ein Monitormerkmal eines der nachfolgenden Datenelemente, die an eines der nachfolgenden Empfangsgeräte (232) gesendet werden sollen, umwandelt und das eine der nachfolgenden Datenelemente, dessen Monitormerkmal umgewandelt worden ist, in den nachfolgenden Shared Memories (125) speichert.

18. Relais-Server (100) nach Anspruch 14, der mehrere Shared Memories aufweist, die einen Shared Memory (124) und einen oder mehrere nachfolgende Shared Memories (125) jeweils zum Zwischenspeichern der Datenelemente umfassen, **dadurch gekennzeichnet, dass**
die Ausgabe-Einheit (220) mehrere Ausgabevorrichtungen aufweist, die eine Ausgabevorrichtung (221) und eine oder mehrere nachfolgende Ausgabevorrichtungen (222) umfassen,
die mehreren Pipeline-Komponenten eine Pipeline-Komponente (121) und eine oder mehrere nachfolgende Pipeline-Komponenten (122) umfassen,
eine der Pipeline-Komponenten (121) so betreibbar ist, dass sie ein Monitormerkmal eines der Datenelemente, die von der einen Ausgabevorrichtung (221) empfangen werden, umwandelt und das eine der Datenelemente, dessen Monitormerkmal umgewandelt worden ist, in einem der Shared Memories (124) speichert, und
eine der nachfolgenden Pipeline-Komponenten (122) so betreibbar ist, dass sie ein Monitormerkmal eines der nachfolgenden Datenelemente, die von der nachfolgenden Ausgabevorrichtung (222) empfangen werden, umwandelt und das eine der Datenelemente, dessen Monitormerkmal umgewandelt worden ist, in einem der nachfolgenden Shared Memories (125) speichert.

19. Relais-Server (100) nach Anspruch 14, **dadurch gekennzeichnet, dass**
der Pipeline-Teil (120) eine Prioritätsfestlegungs-Pipeline-Komponente (129) zum Vergleichen jedes der Bilddatenelemente mit einem vorgegebenen Bildmuster, um einen Übereinstimmungsgrad, das heißt, wie gut das Bilddatenelement mit dem Bildmuster übereinstimmt, zu ermitteln, und zum Festlegen einer Prioritätsebene für das Bilddatenelement entsprechend dem Übereinstimmungsgrad aufweist und
der ausgangsseitige Protokollhandler (131) so betreibbar ist, dass er für jedes der Bilddatenelemente entscheidet, ob die von der Prioritätsfestlegungs-Pipeline-Komponente (129) festgelegte Prioritätsebene höher als ein vorgegebener Schwellenwert ist, und das Bilddatenelement aussortiert, wenn entschieden wird, dass die Prioritätsebene nicht höher als der Schwellenwert ist.

20. Relais-Server (100) nach Anspruch 14, **dadurch gekennzeichnet, dass**
die Eingabe-Einheit (230) mehrere Empfangsgeräte aufweist,
die Steuermittel (140, 150) einen Authentisierungsspeicherteil (154) zum Speichern einer Authentisierungstabelle aufweisen, die die Beziehung zwischen Nutzerinformationen und Autorisierungsstatus angibt, und
die Steuermittel (140, 150) so betreibbar sind, dass sie Nutzerinformationen von dem Empfangsgerät (231), das auf den Relais-Server (100) zuzugreifen versucht, empfangen, um den Autorisierungsstatus des Empfangsgeräts (231) durch Referenzieren der in dem Authentisierungsspeicherteil (154) gespeicherten Authentisierungstabelle zu ermitteln und die Autorisierung der Empfangsgeräte (231) entsprechend dem auf diese Weise ermittelten Autorisierungsstatus zu begrenzen.

21. Relais-Server (100) nach Anspruch 1, **dadurch gekennzeichnet, dass** das Kommunikationsprotokoll ein Netzprotokoll ist.

22. Relais-Server (100) nach Anspruch 1, **dadurch gekennzeichnet, dass** das Kommunikationsprotokoll ein Hypertext Transfer Protocol (HTTP) umfasst.

23. Relais-Server (100) nach Anspruch 1, **dadurch gekennzeichnet, dass** das Kommunikationsprotokoll ein H.323-Protokoll umfasst.

24. Relais-Server (100) nach Anspruch 1, **dadurch gekennzeichnet, dass** das Kommunikationsprotokoll ein Session Initiation Protocol (SIP) umfasst.

25. Relais-Server (100) nach Anspruch 1, **dadurch gekennzeichnet, dass** das Kommunikationsprotokoll ein Inter-Process Communications Protocol umfasst.

26. Relais-Server (100) nach Anspruch 1, **dadurch gekennzeichnet, dass** das Kommunikationsprotokoll ein Protokoll umfasst, das es dem Relais-Server (100) ermöglicht, auf eine externe Speichereinheit zuzugreifen.

27. Relais-Server (100) nach Anspruch 20, **dadurch gekennzeichnet, dass** die Nutzerinformationen einen Nutzernamen und ein Passwort umfassen.

28. Relais-Server (100) nach Anspruch 20, **dadurch gekennzeichnet, dass** die Nutzerinformationen einen Zugriffspfad eines Nutzers umfassen.

29. Relais-Server (100) nach Anspruch 20, **dadurch gekennzeichnet, dass** die Nutzerinformationen Informationen umfassen, die ein Empfangsgerät angeben, das auf den Relais-Server (100) als Einheit zuzugreifen versucht.

30. Relais-Server (100) nach Anspruch 20, **dadurch gekennzeichnet, dass** die Nutzerinformationen Informationen umfassen, die ein Empfangsgerät angeben, das auf den Relais-Server (100) als einen Ort in einem Kommunikationsnetz zuzugreifen versucht.

31. Relais-Server (100) nach Anspruch 20, **dadurch gekennzeichnet, dass**
die Ausgabe-Einheit (220) mehrere Ausgabevorrichtungen aufweist und
der Autorisierungsstatus die Autorisierung für das Zugreifenlassen auf eine oder mehrere der Ausgabevorrichtungen (221, 222) umfasst.

32. Relais-Server (100) nach Anspruch 20, **dadurch gekennzeichnet, dass**
die Ausgabe-Einheit (220) mehrere Ausgabevorrichtungen aufweist und
der Autorisierungsstatus die Autorisierung zum Aktivieren einer oder mehrerer der Pipeline-Komponenten umfasst, die Bestandteil des Pipeline-Teils (120) sind.

33. Relais-Server (100) nach Anspruch 1, **dadurch gekennzeichnet, dass** das Eingangs-Datensignal in dem eingangsseitigen Kommunikationsprotokoll Bilddatenelemente enthält.

34. Relais-Server (100) nach Anspruch 1, **dadurch gekennzeichnet, dass** das Eingangs-Datensignal in dem eingangsseitigen Kommunikationsprotokoll Sprachdatenelemente enthält.

35. Relais-Server-Verfahren mit den folgenden Schritten:
(a) Empfangen eines Eingangs-Datensignals in einem eingangsseitigen Kommunikationsprotokoll, das von einer Ausgabe-Einheit (220) gesendet wird, Umwandeln des Eingangs-Datensignals in dem eingangsseitigen Kommunikationsprotokoll in ein Ausgangs-Datensignal in einem ausgangsseitigen Kommunikationsprotokoll, das für eine Eingabe-Einheit (230) verwendet werden kann, und Senden des Ausgangs-Datensignals in dem ausgangsseitigen Kommunikationsprotokoll an die Eingabe-Einheit (230) und
(b) Empfangen von Endgerät-Protokollinformationen, die das für die Eingabe-Einheit (230) verwendbare ausgangsseitige Kommunikationsprotokoll angeben, von der Eingabe-Einheit (230) und Steuern des Schritts (a) in Reaktion auf die Endgerät-Protokollinformationen, wobei das Eingangs-Datensignal in dem eingangsseitigen Kommunikationsprotokoll ein Protokoll-Element und Datenelemente enthält, das Ausgangs-Datensignal in dem ausgangsseitigen Kommunikationsprotokoll ein Protokoll-Element und Datenelemente enthält und der Schritt (a) weiterhin folgende Schritte aufweist:
einen Schritt (a1) des Entfernens des Protokoll-Elements aus dem Eingangs-Datensignal in dem eingangsseitigen Kommunikationsprotokoll, um die Datenelemente zu extrahieren; und
einen Schritt (a2) des Synthetisierens eines Protokoll-Elements und der Datenelemente, um das Ausgangs-Datensignal in dem ausgangsseitigen Kommunikationsprotokoll zu erzeugen;
wobei jedes der Datenelemente mehrere Eigenschaften hat und der Schritt (a) weiterhin Folgendes aufweist:
die Schritte (a3) des Eingebens der in dem Schritt (a1) extrahierten Datenelemente, des Umwandelns der Eigenschaften der auf diese Weise eingegebenen Datenelemente und des Ausgebens der Datenelemente mit den auf diese Weise umgewandelten Eigenschaften an den Schritt (a2), wobei die Datenelemente Bilddatenelemente sind, die jeweils Bildformate haben,
**dadurch gekennzeichnet, dass**
der Schritt (a3) mehrere Pipeline-Schritte jeweils zum Umwandeln des Bildformats des Bilddatenelements aufweist,
der Schritt (b) weiterhin folgende Schritte aufweist:
(b1) Speichern einer Bildformat-Tabelle (144), die die Beziehung zwischen mehreren Bildformaten und mehreren Pipeline-Schritten angibt;
(b2) Empfangen von Endgerät-Formatinformationen, die ein ausgangsseitiges Bildformat angeben, das für die Eingabe-Einheit (230) verwendet werden kann, von der Eingabe-Einheit (230), Identifizieren eines eingangsseitigen Bildformats, das für die Ausgabe-Einheit (220) verwendet werden kann, aufgrund des von der Ausgabe-Einheit (220) gesendeten Eingangs-Datensignals, Identifizieren des ausgangsseitigen Bildformats, das für die Eingabe-Einheit (230) verwendet werden kann, aufgrund der Endgerät-Formatinformationen und Entscheiden, ob das eingangsseitige Bildformat gleich dem ausgangsseitigen Bildformat ist; und
(b3) Auswählen eines verwendbaren Pipeline-Schritts, der zum Umwandeln des eingangsseitigen Bildformats in das auf diese Weise identifizierte ausgangsseitige Bildformat verwendet werden kann, aus den Pipeline-Schritten durch Referenzieren der im Schritt (b1) gespeicherten Bildformat-Tabelle (144), wenn im Schritt (b2) entschieden wird, dass das eingangsseitige Bildformat nicht gleich dem von dem Bildformat-Identifikationsteil identifizierten ausgangsseitigen Bildformat ist, und dass
der auf diese Weise ausgewählte verwendbare Pipeline-Schritt einen Schritt des Umwandelns des eingangsseitigen Bildformats des Bilddatenelements in das ausgangsseitige Bildformat hat.

36. Relais-Server-Computerprogrammprodukt, das ein für Computer verwendbares Speichermedium mit einem darin enthaltenen maschinenlesbaren Code aufweist, der Folgendes aufweist:
einen ersten Programmproduktcode zum Empfangen eines Eingangs-Datensignals in einem eingangsseitigen Kommunikationsprotokoll, das von einer Ausgabe-Einheit (220) gesendet wird, zum Umwandeln des Eingangs-Datensignals in dem eingangsseitigen Kommunikationsprotokoll in ein Ausgangs-Datensignal in einem ausgangsseitigen Kommunikationsprotokoll, das für eine Eingabe-Einheit (230) verwendet werden kann, und zum Senden des Ausgangs-Datensignals in dem ausgangsseitigen Kommunikationsprotokoll an die Eingabe-Einheit (230); und
einen zweiten Programmproduktcode zum Empfangen von Endgerät-Protokollinformationen, die das für die Eingabe-Einheit (230) verwendbare ausgangsseitige Kommunikationsprotokoll angeben, von der Eingabe-Einheit (230) und zum Steuern des ersten Programmproduktcodes in Reaktion auf die Endgerät-Protokollinformationen,
wobei das Eingangs-Datensignal in dem eingangsseitigen Kommunikationsprotokoll ein Protokoll-Element und Datenelemente enthält, das Ausgangs-Datensignal in dem ausgangsseitigen Kommunikationsprotokoll ein Protokoll-Element und Datenelemente enthält und der erste Programmproduktcode weiterhin Folgendes aufweist:
einen Code (a1) zum Entfernen des Protokoll-Elements aus dem Eingangs-Datensignal in dem eingangsseitigen Kommunikationsprotokoll, um die Datenelemente zu extrahieren; und einen Code (a2) zum Synthetisieren eines Protokoll-Elements und der Datenelemente, um das Ausgangs-Datensignal in dem ausgangsseitigen Kommunikationsprotokoll zu erzeugen;
wobei jedes der Datenelemente mehrere Eigenschaften hat und der erste Programmproduktcode weiterhin Folgendes aufweist;
den Code (a3) zum Eingeben der mit dem Code (a1) extrahierten Datenelemente, zum Umwandeln der Eigenschaften der auf diese Weise eingegebenen Datenelemente und zum Ausgeben der Datenelemente mit den auf diese Weise umgewandelten Eigenschaften an den Code (a2), wobei die Datenelemente Bilddatenelemente sind, die jeweils Bildformate haben,
**dadurch gekennzeichnet, dass**
der Code (a3) mehrere Pipeline-Schritte jeweils zum Umwandeln des Bildformats des Bilddatenelements aufweist,
der zweite Programmproduktcode weiterhin folgende Codes aufweist:
einen Code (b1) zum Speichern einer Bildformat-Tabelle (144), die die Beziehung zwischen mehreren Bildformaten und mehreren Pipeline-Schritten angibt;
einen Code (b2) zum Empfangen von Endgerät-Formatinformationen, die ein ausgangsseitiges Bildformat angeben, das für die Eingabe-Einheit (230) verwendet werden kann, von der Eingabe-Einheit (230), zum Identifizieren eines eingangsseitigen Bildformats, das für die Ausgabe-Einheit (220) verwendet werden kann, aufgrund des von der Ausgabe-Einheit (220) gesendeten Eingangs-Datensignals, zum Identifizieren des ausgangsseitigen Bildformats, das für die Eingabe-Einheit (230) verwendet werden kann, aufgrund der Endgerät-Formatinformationen und zum Entscheiden, ob das eingangsseitige Bildformat gleich dem ausgangsseitigen Bildformat ist; und
einen Code (b3) zum Auswählen eines verwendbaren Pipeline-Schritts, der zum Umwandeln des eingangsseitigen Bildformats in das auf diese Weise identifizierte ausgangsseitige Bildformat verwendet werden kann, aus den Pipeline-Schritten durch Referenzieren der von dem Code (b1) gespeicherten Bildformat-Tabelle (144), wenn von dem Code (b2) entschieden wird, dass das eingangsseitige Bildformat nicht gleich dem von dem Bildformat-Identifikationsteil identifizierten ausgangsseitigen Bildformat ist, und dass
der auf diese Weise ausgewählte verwendbare Pipeline-Schritt einen Code zum Umwandeln des eingangsseitigen Bildformats des Bilddatenelements in das ausgangsseitige Bildformat hat.

## Revendications

1. Serveur de relais (100) comprenant :
un moyen de conversion de protocole (110, 120, 130) destiné à recevoir un signal de données d'entrée selon un protocole de communications du côté entrée transmis par une entité de sortie (220), convertissant ledit signal de données entrée selon le protocole de communications du côté d'entrée en un signal de données de sortie selon un protocole de communications du côté sortie applicable à une entité d'entrée (230), et transmettant ledit signal de données de sortie selon ledit protocole de communications du côté sortie à ladite entité d'entrée (230), et
un moyen de commande (140, 150) destiné à recevoir des informations de protocole de terminal indicatives dudit protocole de communications du côté sortie applicable à ladite entité d'entrée (230) provenant de ladite entité d'entrée (230) et commandant ledit moyen de conversion de protocole (110, 120, 130) en réponse auxdites informations de protocole de terminal, et dans lequel
ledit signal de données d'entrée selon ledit protocole de communications du côté entrée comprend un élément de protocole et des éléments de données, ledit signal de données de sortie selon ledit protocole de communications du côté sortie comprend un élément de protocole et des éléments de données, et ledit moyen de conversion de protocole (110, 120, 130) comprend en outre une section de suppression de protocole (110) destinée à supprimer ledit élément de protocole dudit signal de données d'entrée selon ledit protocole de communications du côté entrée pour extraire lesdits éléments de données, et une section de synthétisation de protocole (130) destinée à synthétiser un élément de protocole et lesdits éléments de données pour générer ledit signal de données de sortie selon ledit protocole de communications du côté sortie,
chacun desdits éléments de données présente une pluralité de propriétés,
ledit moyen de conversion de protocole (110, 120, 130) comprend :
une section en pipeline (120) destinée à appliquer en entrée lesdits éléments de données extraits par ladite section de suppression de protocole (110), convertir lesdites propriétés desdits éléments de données ainsi appliqués en entrée et fournir en sortie lesdits éléments de données présentant les propriétés ainsi converties à ladite section de synthétisation de protocole (130), lesdits éléments de données sont des éléments de données d'image ayant respectivement des formats d'image,
**caractérisé en ce que**
ladite section en pipeline (120) comprend : une pluralité de composants en pipeline destinés chacun à convertir ledit format d'image dudit élément de données d'image,
ledit moyen de commande (140, 150) comprend:
un composant de mémorisation en pipeline (153) destiné à mémoriser dans celui-ci une table de formats d'image (144) indicative de la relation entre une pluralité de formats d'image et une pluralité de composants en pipeline,
une section d'identification de formats d'image destinée à recevoir des informations de formats de terminal indicatives d'un format d'image du côté sortie applicable à ladite entité d'entrée (230) provenant de ladite entité d'entrée (230), identifier un format d'image du côté entrée applicable à ladite entité de sortie (220) sur la base dudit signal de données d'entrée transmis par ladite entité de sortie (220), identifier ledit format d'image du côté sortie applicable à ladite entité d'entrée (230) sur la base desdites informations de format de terminal, et évaluer si ledit format d'image du côté entrée est identique audit format d'image du côté sortie, et
une section de sélection en pipeline destinée à sélectionner un composant en pipeline applicable (121) applicable pour convertir ledit format d'image du côté entrée en ledit format d'image du côté sortie ainsi identifié à partir desdits composants en pipeline en faisant référence à ladite table de formats d'image (144) mémorisée dans ledit composant de mémorisation en pipeline (153) lorsqu'il est évalué que ledit format d'image du côté entrée n'est pas identique audit format d'image du côté sortie par ladite section d'identification de formats d'image, et dans lequel
ledit composant en pipeline applicable (121) ainsi sélectionné est opérationnel pour convertir ledit format d'image du côté entrée dudit élément de données d'image en ledit format d'image du côté sortie.

2. Serveur de relais (100) selon la revendication 1, dans lequel lesdits éléments de données d'image présentent chacun une caractéristique de moniteur, ledit composant de mémorisation en pipeline (153) est opérationnel pour mémoriser dans celui-ci une table de caractéristiques de moniteur (144) indicative d'une relation entre une pluralité de caractéristiques de moniteur et une pluralité de composants en pipeline, et ladite section en pipeline (120) comprend : une pluralité de composants en pipeline destinés chacun à convertir l'une desdites caractéristiques de moniteur desdits éléments de données d'image,
ledit moyen de commande (140, 150) comprend:
une section d'identification de caractéristiques de moniteur destinée à recevoir des informations de format de terminal indicatives d'une caractéristique de moniteur du côté sortie applicable à ladite entité d'entrée (230) provenant de ladite entité d'entrée (230), identifier une caractéristique de moniteur du côté entrée applicable à ladite entité de sortie (220) sur la base dudit signal de données d'entrée transmis par ladite entité de sortie (220), identifier ladite caractéristique de moniteur du côté sortie applicable à ladite entité d'entrée (230) sur la base desdites informations de format de terminal, et évaluer si ladite caractéristique de moniteur du côté entrée est identique à ladite caractéristique de moniteur du côté sortie, et
une section de sélection en pipeline destinée à sélectionner un composant en pipeline applicable, applicable pour convertir ladite caractéristique de moniteur du côté entrée en ladite caractéristique de moniteur du côté sortie ainsi identifiée parmi lesdits composants en pipeline en faisant référence à ladite table de caractéristiques de moniteur (144) mémorisée dans ledit composant de mémorisation en pipeline (153) lorsqu'il est évalué que ladite caractéristique de moniteur du côté entrée n'est pas identique à ladite caractéristique de moniteur du côté sortie par ladite section d'identification de caractéristiques de moniteur, grâce à quoi
ledit composant en pipeline ainsi sélectionné est opérationnel pour convertir ladite caractéristique de moniteur du côté entrée de l'un desdits éléments de données d'image en ladite caractéristique de moniteur du côté sortie.

3. Serveur de relais (100) selon la revendication 2, dans lequel ladite caractéristique de moniteur est une résolution d'image.

4. Serveur de relais (100) selon la revendication 2, dans lequel ladite caractéristique de moniteur est un nombre de couleurs indicatif du nombre maximum de couleurs devant être affichées sur un moniteur.

5. Serveur de relais (100) selon la revendication 1, comprenant en outre : une pluralité de mémoires partagées comprenant une première mémoire partagée (124) et une ou plusieurs mémoires partagées suivantes (125) mémorisant chacune temporairement lesdits éléments de données, dans lequel
ladite entité d'entrée (230) comprend une pluralité de terminaux de réception comprenant un premier terminal de réception (231) et un ou plusieurs terminaux de réception suivants (232),
le premier desdits composants en pipeline (121) est opérationnel pour convertir une propriété du premier élément desdits éléments de données devant être transmis audit premier des terminaux de réception (231) et mémoriser ledit premier desdits éléments de données, dont ladite propriété a été convertie, dans une première desdites mémoires partagées (124), alors que le premier desdits composants en pipeline (121) est opérationnel pour convertir ladite propriété de l'élément suivant parmi lesdits éléments de données devant être transmis audit terminal suivant parmi les terminaux de réception (232), et mémoriser ledit élément suivant parmi lesdits éléments de données, dont ladite propriété a été convertie, dans lesdites mémoires partagées suivantes (125).

6. Serveur de relais (100) selon la revendication 1, comprenant en outre : une pluralité de mémoires partagées comprenant une première mémoire partagée (124) et une ou plusieurs mémoires partagées suivantes (125) mémorisant chacune temporairement lesdits éléments de données, dans lequel
ladite entité de sortie (220) comprend une pluralité de dispositifs de sortie comprenant un premier dispositif de sortie (221) et un ou plusieurs dispositifs de sortie suivants (222),
ladite pluralité de composants en pipeline comprend un premier composant en pipeline (121) et un ou plusieurs composants en pipeline suivants (122),
le premier desdits composants en pipeline (121) est opérationnel pour convertir une propriété du premier desdits éléments de données reçu par ledit premier dispositif de sortie (221) et pour mémoriser ledit premier desdits éléments de données, dont ladite propriété a été convertie, dans la première desdites mémoires partagées (124), et
un composant suivant parmi lesdits composants en pipeline (122) est opérationnel pour convertir une propriété d'un élément suivant parmi lesdits éléments de données reçu par ledit dispositif de sortie suivant (222), et pour mémoriser ledit élément suivant parmi lesdits éléments de données, dont ladite propriété a été convertie, dans la mémoire suivante parmi lesdites mémoires partagées (125).

7. Serveur de relais (100) selon la revendication 1, dans lequel ledit moyen de conversion de protocole (110, 120, 130) comprend une section de réglage de niveau (129) destinée à régler un niveau de priorité pour chacun desdits éléments de données, ledit moyen de conversion de protocole (110, 120, 130) est opérationnel pour convertir ledit signal de données conformément audit niveau de priorité réglé par ladite section de réglage de niveau (129).

8. Serveur de relais (100) selon la revendication 1, comprenant en outre un moyen d'horloge (160) destiné à mesurer le temps, dans lequel
ledit moyen de conversion de protocole (110, 120, 130) est opérationnel pour recevoir une pluralité de signaux de données d'entrée, pour affecter un horodateur auxdits signaux de données d'entrée à un intervalle de temps prédéterminé mesuré par ledit moyen d'horloge (160), et pour convertir lesdits signaux de données d'entrée en signaux de données de sortie, ainsi que pour transmettre lesdits signaux de données de sortie à ladite entité d'entrée (230) de manière synchrone avec lesdits horodateurs.

9. Serveur de relais (100) selon la revendication 1, dans lequel
ledit moyen de conversion de protocole (110, 120, 130) comprend :
une section de gestionnaires de protocoles du côté entrée (110) comprenant une pluralité de gestionnaires de protocoles du côté entrée destinés à convertir chacun un signal de données d'entrée selon un protocole de communications du côté entrée en éléments de données,
ledit moyen de commande (140, 150) comprend :
une section de mémorisation de protocoles (151, 152) destinée à mémoriser dans celle-ci une table de protocoles (142) indicative d'une relation entre une pluralité de protocoles de communications et une pluralité de gestionnaires de protocoles,
une section d'identification de protocole (141) destinée à identifier ledit protocole de communications du côté entrée sur la base dudit signal de données d'entrée transmis par ladite entité de sortie (220),
une section de sélection de protocole (143) destinée à sélectionner un gestionnaire de protocole du côté entrée applicable (111) applicable audit protocole de communications du côté entrée ainsi identifié à partir desdits gestionnaires de protocoles du côté entrée (111, 112, 113, 114) en faisant référence à ladite table de protocoles (142) mémorisée dans ladite section de mémorisation de protocoles (151, 152), et dans lequel
ledit moyen de commande (140, 150) est opérationnel pour faire en sorte que ledit gestionnaire de protocole du côté entrée applicable (111) ainsi sélectionné convertisse ledit signal de données d'entrée selon ledit protocole de communications du côté entrée ainsi reçu en éléments de données.

10. Serveur de relais (100) selon la revendication 9, dans lequel ledit signal de données d'entrée selon ledit protocole de communications du côté entrée comprend un élément de protocole et des éléments de données, et
ledit gestionnaire de protocole du côté entrée applicable (111) est opérationnel pour appliquer en entrée ledit signal de données d'entrée selon ledit protocole de communications du côté entrée ainsi reçu, et supprimer ledit élément de protocole dudit signal de données d'entrée selon ledit protocole de communications du côté entrée pour extraire lesdits éléments de données.

11. Serveur de relais (100) selon la revendication 9, dans lequel ledit moyen de conversion de protocole (110, 120, 130) comprend :
une section de gestionnaires de protocoles du côté sortie (130) comprenant une pluralité de gestionnaires de protocoles du côté sortie destinés chacun à convertir des éléments de données en un signal de données de sortie selon un protocole de communications du côté sortie,
ladite section d'identification de protocole (141) est opérationnelle pour identifier ledit protocole de communications du côté sortie sur la base desdites informations de protocole de terminal reçues de ladite entité d'entrée (230), ladite section de sélection de protocole (143) est opérationnelle pour sélectionner un gestionnaire de protocole du côté sortie applicable (131), applicable audit protocole de communications du côté sortie ainsi identifié à partir desdits gestionnaires de protocoles du côté sortie (131, 132, 133, 134) en faisant référence à ladite table de protocoles (142) mémorisée dans ladite section de mémorisation de protocoles (151, 152), et dans lequel
ledit moyen de commande (140, 150) est opérationnel pour faire en sorte que ledit gestionnaire de protocole du côté sortie applicable (131) convertisse lesdits éléments de données en un signal de données de sortie selon un protocole de communications du côté sortie, et transmettre ledit signal de données de sortie selon ledit protocole de communications du côté sortie ainsi converti.

12. Serveur de relais (100) selon la revendication 11, dans lequel ledit signal de données de sortie selon ledit protocole de communications du côté sortie comprend un élément de protocole et des éléments de données, et
ledit gestionnaire de protocole du côté sortie applicable (131) est opérationnel pour appliquer en entrée lesdits éléments de données, et synthétiser un élément de protocole et lesdits éléments de données pour générer ledit signal de données de sortie selon ledit protocole de communications du côté sortie.

13. Serveur de relais (100) selon la revendication 11, dans lequel ledit moyen de conversion de protocole (110, 120, 130) comprend une section en pipeline (120) destinée à appliquer en entrée lesdits éléments de données provenant de ladite section de gestionnaires de protocoles du côté entrée (110), lesdits éléments de données sont des éléments de données d'image présentant respectivement des formats d'image,
ladite section en pipeline (120) comprend : une pluralité de composants en pipeline destinés à convertir chacun ledit format d'image dudit élément de données d'image,
ledit moyen de commande (140, 150) comprend :
un composant de mémorisation en pipeline (153) destiné à mémoriser dans celui-ci une table de formats d'image (144) indicative d'une relation entre une pluralité de formats d'image et une pluralité de composants en pipeline,
une section d'identification de formats d'image destinée à recevoir des informations de format de terminal indicatives d'un format d'image du côté sortie applicable à ladite entité d'entrée (230) provenant de ladite entité d'entrée (230), identifier un format d'image du côté entrée applicable à ladite entité de sortie (220) sur la base dudit signal de données d'entrée transmis par ladite entité de sortie (220), pour identifier ledit format d'image du côté sortie applicable à ladite entité d'entrée (230) sur la base desdites informations de format de terminal, et évaluer si ledit format d'image du côté entrée est identique audit format d'image du côté sortie,
une section de sélection en pipeline destinée à sélectionner un composant en pipeline applicable (121) applicable audit format d'image du côté entrée et audit format d'image du côté sortie ainsi identifiés à partir desdits composants en pipeline en faisant référence à ladite table de formats d'image (144) mémorisée dans ledit composant de mémorisation en pipeline (153) lorsqu'il est évalué que ledit format d'image du côté entrée n'est pas identique audit format d'image du côté sortie, et dans lequel
ledit composant en pipeline applicable (121) ainsi sélectionné est opérationnel pour convertir ledit format d'image du côté entrée dudit élément de données d'image en ledit format d'image du côté sortie.

14. Serveur de relais (100) selon la revendication 13, dans lequel lesdits éléments de données d'image présentent chacun une pluralité de caractéristiques de moniteur, ladite section en pipeline (120) comprend: une pluralité de composants en pipeline destinés chacun à convertir l'une desdites caractéristiques de moniteur desdits éléments de données d'image, ledit composant de mémorisation en pipeline (153) est opérationnel pour mémoriser dans celui-ci une table de caractéristiques de moniteur (144) indicative d'une relation entre une pluralité de caractéristiques de moniteur et une pluralité de composants en pipeline,
ledit moyen de commande (140, 150) comprend :
une section d'identification de caractéristiques de moniteur destinée à recevoir des informations de format de terminal indicatives d'une caractéristique de moniteur du côté sortie applicable à ladite entité d'entrée (230) provenant de ladite entité d'entrée (230), identifier une caractéristique de moniteur du côté entrée applicable à ladite entité de sortie (220) sur la base dudit signal de données d'entrée transmis par ladite entité de sortie (220), identifier ladite caractéristique de moniteur du côté sortie applicable à ladite entité d'entrée (230) sur la base desdites informations de format de terminal, et évaluer si ladite caractéristique de moniteur du côté entrée est identique à ladite caractéristique de moniteur du côté sortie,
une section de sélection en pipeline destinée à sélectionner un composant en pipeline applicable, applicable pour convertir ladite caractéristique de moniteur du côté entrée en ladite caractéristique de moniteur du côté sortie ainsi identifiée à partir desdits composants en pipeline en faisant référence à ladite table de caractéristiques de moniteur (144) mémorisée dans ledit composant de mémorisation en pipeline (153) lorsqu'il est évalué que ladite caractéristique de moniteur du côté entrée n'est pas identique à ladite caractéristique de moniteur du côté sortie, et dans lequel
ledit composant en pipeline ainsi sélectionné est opérationnel pour convertir ladite caractéristique de moniteur du côté entrée de l'un desdits éléments de données d'image en ladite caractéristique de moniteur du côté sortie.

15. Serveur de relais (100) selon la revendication 14, dans lequel lesdites caractéristiques de moniteur comprennent une résolution d'image.

16. Serveur de relais (100) selon la revendication 14, dans lequel lesdites caractéristiques de moniteur comprennent un nombre de couleurs indicatif du nombre maximum de couleurs devant être affichées sur un moniteur.

17. Serveur de relais (100) selon la revendication 14, comprenant :
une pluralité de mémoires partagées comprenant une première mémoire partagée (124) et une ou plusieurs mémoires partagées suivantes (125) destinées chacune à mémoriser temporairement lesdits éléments de données, dans lequel
ladite entité d'entrée (230) comprend une pluralité de terminaux de réception comprenant un premier terminal de réception (231) et un ou plusieurs terminaux de réception suivants (232),
le premier desdits composants en pipeline (121) est opérationnel pour convertir une caractéristique de moniteur du premier desdits éléments de données devant être transmis audit premier des terminaux de réception (231), et mémoriser ledit premier desdits éléments de données, dont ladite caractéristique de moniteur a été convertie, dans la première desdites mémoires partagées (124), alors que ledit premier desdits composants en pipeline (121) est opérationnel pour convertir une caractéristique de moniteur d'un élément suivant parmi les éléments de données devant être transmis audit terminal suivant parmi les terminaux de réception (232), et mémoriser ledit élément suivant parmi lesdits éléments de données, dont la caractéristique de moniteur a été convertie, dans lesdites mémoires partagées suivantes (125).

18. Serveur de relais (100) selon la revendication 14, comprenant :
une pluralité de mémoires partagées comprenant une première mémoire partagée (124) et une ou plusieurs mémoires partagées (125) destinées chacune à mémoriser temporairement lesdits éléments de données, dans lequel
ladite entité de sortie (220) comprend une pluralité de dispositifs de sortie comprenant un premier dispositif de sortie (221) et un ou plusieurs dispositifs de sortie suivants (222),
ladite pluralité de composants en pipeline comprend un premier composant en pipeline (121) et un ou plusieurs composants en pipeline suivants (122),
le premier desdits composants en pipeline (121) est opérationnel pour convertir une caractéristique de moniteur d'un premier desdits éléments de données reçu par ledit premier dispositif de sortie (221), et pour mémoriser ledit premier élément desdits éléments de données, dont ladite caractéristique de moniteur a été convertie, dans la première desdites mémoires partagées (124), et
le composant suivant parmi lesdits composants en pipeline (122) est opérationnel pour convertir une caractéristique de moniteur d'un élément suivant parmi lesdits éléments de données reçu par ledit dispositif de sortie suivant (222), et pour mémoriser ledit un élément parmi lesdits éléments de données, dont ladite caractéristique de moniteur a été convertie, dans une mémoire suivante parmi lesdites mémoires partagées (125).

19. Serveur de relais (100) selon la revendication 14, dans lequel ladite section en pipeline (120) comprend un composant en pipeline de réglage de priorité (129) destiné à comparer chacun desdits éléments de données d'image à un motif d'image prédéterminé pour déterminer un degré de correspondance du point auquel ledit élément de données d'image correspond audit motif d'image, et régler un niveau de priorité pour ledit élément de données d'image conformément audit degré de correspondance, et
ledit gestionnaire de protocole du côté sortie (131) est opérationnel pour évaluer si ledit niveau de priorité réglé par ledit composant en pipeline de réglage de priorité (129) est supérieur à une valeur de seuil prédéterminée en ce qui concerne chacun des éléments de données d'image, et rejeter ledit élément de données d'image s'il est évalué que ledit niveau de priorité n'est pas supérieur à ladite valeur de seuil.

20. Serveur de relais (100) selon la revendication 14, dans lequel
ladite entité d'entrée (230) comprend une pluralité de terminaux de réception,
ledit moyen de commande (140, 150) comprend une section de mémorisation d'authentification (154) destinée à mémoriser dans celle-ci une table d'authentification indicative d'une relation entre des informations d'utilisateur et des états d'autorisation,
ledit moyen de commande (140, 150) est opérationnel pour recevoir des informations d'utilisateur dudit terminal de réception (231) qui tente d'accéder audit serveur de relais (100) pour déterminer ledit état d'autorisation dudit terminal de réception (231) en faisant référence à ladite table d'authentification mémorisée dans ladite section de mémorisation d'authentification (154) et limiter l'autorisation desdits terminaux de réception (231) conformément audit état d'autorisation ainsi déterminé.

21. Serveur de relais (100) selon la revendication 1, dans lequel ledit protocole de communications est un protocole de réseau.

22. Serveur de relais (100) selon la revendication 1, dans lequel ledit protocole de communications comprend le protocole de transfert hypertexte, c'est-à-dire le protocole HTTP.

23. Serveur de relais (100) selon la revendication 1, dans lequel ledit protocole de communications comprend le protocole H. 323.

24. Serveur de relais (100) selon la revendication 1, dans lequel ledit protocole de communications comprend le protocole d'initiation de session, c'est-à-dire le protocole SIP.

25. Serveur de relais (100) selon la revendication 1, dans lequel ledit protocole de communications comprend un protocole de communications inter-traitements.

26. Serveur de relais (100) selon la revendication 1, dans lequel ledit protocole de communications comprend un protocole qui permet audit serveur de relais (100) d'accéder à un dispositif de mémorisation externe.

27. Serveur de relais (100) selon la revendication 20, dans lequel lesdites informations d'utilisateur comprennent un nom d'utilisateur et un mot de passe.

28. Serveur de relais (100) selon la revendication 20, dans lequel lesdites informations d'utilisateur comprennent un chemin d'accès d'un utilisateur.

29. Serveur de relais (100) selon la revendication 20, dans lequel lesdites informations d'utilisateur comprennent des informations spécifiant un terminal de réception qui tente d'accéder audit serveur de relais (100) en tant qu'entité.

30. Serveur de relais (100) selon la revendication 20, dans lequel lesdites informations d'utilisateur comprennent des informations spécifiant un terminal de réception qui tente d'accéder audit serveur de relais (100) en tant qu'emplacement dans un réseau de communication.

31. Serveur de relais (100) selon la revendication 20, dans lequel
ladite entité de sortie (220) comprend une pluralité de dispositifs de sortie, et
ledit état d'autorisation comprend l'autorisation pour avoir accès à un ou plusieurs dispositifs quelconques parmi lesdits dispositifs de sortie (221, 222).

32. Serveur de relais (100) selon la revendication 20, dans lequel
ladite entité de sortie (220) comprend une pluralité de dispositifs de sortie, et
ledit état d'autorisation comprend l'autorisation de mettre en oeuvre un ou plusieurs composants quelconques parmi lesdits composants en pipeline faisant partie de ladite section en pipeline (120).

33. Serveur de relais (100) selon la revendication 1, dans lequel ledit signal de données d'entrée selon ledit protocole de communications du côté entrée comprend des éléments de données d'image.

34. Serveur de relais (100) selon la revendication 1, dans lequel ledit signal de données d'entrée selon ledit protocole de communications du côté entrée comprend des éléments de données de voix.

35. Procédé de serveur de relais comprenant les étapes consistant à :
(a) recevoir un signal de données d'entrée selon un protocole de communications du côté entrée transmis par une entité de sortie (220), convertir ledit signal de données d'entrée selon ledit protocole de communications du côté entrée en un signal de données de sortie selon un protocole de communications du côté sortie applicable à une entité d'entrée (230), et transmettre ledit signal de données de sortie selon ledit protocole de communications du côté sortie à ladite entité d'entrée (230), et
(b) recevoir des informations de protocole de terminal indicatives dudit protocole de communications du côté sortie applicable à ladite entité d'entrée (230) provenant de ladite entité d'entrée (230) et commander ladite étape (a) en réponse auxdites informations de protocole de terminal, et dans lequel
ledit signal de données d'entrée selon ledit protocole de communications du côté entrée comprend un élément de protocole et des éléments de données, ledit signal de données de sortie selon ledit protocole de communications du côté sortie comprend un élément de protocole et des éléments de données, et ladite étape (a) comprend en outre l'étape consistant à (a1) supprimer ledit élément de protocole dudit signal de données d'entrée selon ledit protocole de communications du côté entrée pour extraire lesdits éléments de données, et une étape consistant à (a2) synthétiser un élément de protocole et lesdits éléments de données pour générer ledit signal de données de sortie selon ledit protocole de communications du côté sortie,
chacun desdits éléments de données présente une pluralité de propriétés,
ladite étape (a) comprend en outre les étapes consistant à (a3) appliquer en entrée lesdits éléments de données extraits à ladite étape (a1), convertir lesdites propriétés desdits éléments de données ainsi appliqués en entrée, et fournir en sortie lesdits éléments de données présentant les propriétés
ainsi converties à ladite étape (a2), lesdits éléments de données sont des éléments de données d'image présentant respectivement des formats d'image,
**caractérisé en ce que**
ladite étape (a3) comprend : une pluralité d'étapes en pipeline destinées à convertir chacune ledit format d'image dudit élément de données d'image,
ladite étape (b) comprend en outre les étapes consistant à :
(b1) mémoriser une table de formats d'image (144) indicative d'une relation entre une pluralité de formats d'image et une pluralité d'étapes en pipeline,
(b2) recevoir des informations de format de terminal indicatives d'un format d'image du côté sortie applicable à ladite entité d'entrée (230) provenant de ladite entité d'entrée (230), identifier un format d'image du côté entrée applicable à ladite entité de sortie (220) sur la base dudit signal de données d'entrée transmis par ladite entité de sortie (220), identifier ledit format d'image du côté sortie applicable à ladite entité d'entrée (230) sur la base desdites informations de format de terminal, et évaluer si ledit format d'image du côté entrée est identique audit format d'image du côté sortie, et
(b3) sélectionner une étape en pipeline applicable, applicable pour convertir ledit format d'image du côté entrée en ledit format d'image du côté sortie ainsi identifiés à partir desdites étapes en pipeline en faisant référence à ladite table de formats d'image (144) mémorisée dans ladite étape (b1) lorsqu'il est évalué à ladite étape (b2) que ledit format d'image du côté entrée n'est pas identique audit format d'image du côté sortie par ladite section d'identification de formats d'image, et dans lequel
ladite étape en pipeline applicable ainsi sélectionnée comporte une étape consistant à convertir ledit format d'image du côté entrée dudit élément de données d'image en ledit format d'image du côté sortie.

36. Produit de programme informatique de serveur de relais comprenant un support de mémorisation utilisable par un ordinateur comportant un code lisible par un ordinateur incorporé dans celui-ci, dans lequel le code lisible par un ordinateur comprend :
un premier code de produit de programme pour recevoir un signal de données d'entrée selon un protocole de communications du côté entrée transmis par une entité de sortie (220), convertir ledit signal de données d'entrée selon ledit protocole de communications du côté entrée en un signal de données de sortie selon un protocole de communications du côté sortie applicable à une entité d'entrée (230), et transmettre ledit signal de données de sortie selon ledit protocole de communications du côté sortie à ladite entité d'entrée (230), et
un second code de produit de programme pour recevoir des informations de protocole de terminal indicatives dudit protocole de communications du côté sortie applicable à ladite entité d'entrée (230) provenant de ladite entité d'entrée (230) et commander ledit premier code de produit de programme en réponse auxdites informations de protocole de terminal, et dans lequel
ledit signal de données d'entrée selon ledit protocole de communications du côté entrée comprend un élément de protocole et des éléments de données, ledit signal de données de sortie selon ledit protocole de communications du côté sortie comprend un élément de protocole et des éléments de données, et ledit premier code de produit de programme comprend en outre un code consistant à (a1) supprimer ledit élément de protocole dudit signal de données d'entrée selon ledit protocole de communications du côté entrée pour extraire lesdits éléments de données, et un code consistant à (a2) synthétiser un élément de protocole et lesdits éléments de données pour générer ledit signal de données de sortie selon ledit protocole de communications du côté sortie,
chacun desdits éléments de données présente une pluralité de propriétés,
ledit premier code de produit de programme comprend en outre le code consistant à (a3) appliquer en entrée lesdits éléments de données extraits par ledit code (a1), convertir lesdites propriétés desdits éléments de données ainsi appliqués en entrée, et fournir en sortie lesdits éléments de données présentant les propriétés ainsi converties audit code, (a2), lesdits éléments de données sont des éléments de données d'image présentant respectivement des formats d'image,
**caractérisé en ce que**
ledit code (a3) comprend : une pluralité d'étapes en pipeline destinées chacune à convertir ledit format d'image dudit élément de données d'image,
ledit second code de produit de programme comprend en outre les codes consistant à :
(b1) mémoriser une table de formats d'image (144) indicative d'une relation entre une pluralité de formats d'image et une pluralité d'étapes en pipeline,
(b2) recevoir des informations de format de terminal indicatives d'un format d'image du côté sortie applicable à ladite entité d'entrée (230) provenant de ladite entité d'entrée (230), identifier un format d'image du côté entrée applicable à ladite entité de sortie (220) sur la base dudit signal de données d'entrée transmis par ladite entité de sortie (220), identifier ledit format d'image du côté sortie applicable à ladite entité d'entrée (230) sur la base desdits informations de format de terminal, et évaluer si ledit format d'image du côté entrée est identique audit format d'image du côté sortie, et
(b3) sélectionner une étape en pipeline applicable, applicable pour convertir ledit format d'image du côté entrée en ledit format d'image du côté sortie ainsi identifié à partir desdites étapes en pipeline en faisant référence à ladite table de formats d'image (144) mémorisée par ledit code (b1) lorsqu'il est évalué par ledit code (b2) que ledit format d'image du côté entrée n'est pas identique audit format d'image du côté sortie par ladite section d'identification de formats d'image, et dans lequel
ladite étape en pipeline applicable ainsi sélectionnée comporte un code destiné à convertir ledit format d'image du côté entrée dudit élément de données d'image en ledit format d'image du côté sortie.
